# EUROPÄISCHE PATENTSCHRIFT

(11) **EP 2 650 183 B1**
(45) Veröffentlichungstag und Bekanntmachung des Hinweises auf die Patenterteilung: **27.04.2016**
(21) Anmeldenummer: 13156795.0
(22) Anmeldetag: 26.02.2013
(51) Int. Cl.: B60T 15/04

(54) **Parkbremsventileinrichtung und pneumatische Anhänger-Druckluftbremsanlage**
Parking brake valve device and pneumatic compressed air brake system for a trailer
Dispositif de soupape de frein de stationnement et installation de freinage à air comprimé pneumatique pour remorque

(30) Priorität: 06.03.2012 DE 102012101871
(43) Veröffentlichungstag der Anmeldung: 16.10.2013
(73) Patentinhaber: Haldex Brake Products GmbH, 69123 Heidelberg (DE)
(72) Erfinder: Sulzyc, Georg, 68305 Mannheim (DE); Maltry, Helmut, 69226 Nussloch (DE); Engel, Georg, 69181 Leimen (DE)
(74) Vertreter: REHBERG HÜPPE + PARTNER

(56) Entgegenhaltungen:
- EP-B1- 0 792 783
- EP-B1- 1 188 634
- EP-B1- 1 188 635
- DE-A1- 10 235 707

## Beschreibung

### GEBIET DER ERFINDUNG

Die vorliegende Erfindung betrifft eine Parkbremsventileinrichtung und eine pneumatische Anhänger-Druckluftbremsanlage, welche insbesondere bestimmt sind für einen Einsatz in einem Anhänger eines Nutzfahrzeuges.

### STAND DER TECHNIK

In EP 0 792 783 B1 ist das Problem beschrieben, dass bei einer Bremsanlage eines Anhängers eines Kraftfahrzeugs eine Verringerung oder ein Entfall eines Drucks an einem Kupplungskopf Vorrat oder in einer vom Zugfahrzeug gespeisten Versorgungsleitung auftreten kann, der insbesondere durch
- ein Abkoppeln der Versorgungsleitung, insbesondere bei einem Abkuppeln des Anhängers,
- eine Leckage im Versorgungsleitungsstrang,
- einen Abriss einer Versorgungsleitung,
- einen Druckeinbruch in dem Zugfahrzeug oder
- einen Unfall

(im folgenden "Notbremssituation") verursacht sein kann.

Gemäß dem in EP 0 792 783 B1 dargestellten Ausführungsbeispiel einer Anhänger-Druckluftbremsanlage wird in einem derartigen Fall eine Notbremsung ausgelöst, indem über ein Anhängerbremsventil in Form eines Relaisventils mit integrierter Notbremsfunktion automatisiert Betriebsbremszylinder des Anhängers aus einem Behälter druckbeaufschlagt werden. Folge einer derartigen Notbremsung über die Betriebsbremszylinder ist, dass der Anhänger auch anschließend im Stillstand durch die Betriebsbremszylinder gebremst ist, sofern die Behälter ausreichend mit Druckluft befüllt sind. Um eine gesicherte Parkstellung auch bei einem schleichenden Druckabfall in den Behältern, beispielsweise bei längerem Stillstand des Anhängers, zu gewährleisten, ist in EP 0 792 783 B1 als bekannt angeführten Bremsanlagen üblicherweise ein Parkventil vorgesehen, welches für eine Parksituation manuell über einen Betätigungsknopf in eine Entlüftungsstellung verbracht werden muss, in welcher eine Entlüftung der Federspeicher-Bremszylinder erfolgt. Da allerdings über die Notbremsfunktion bereits die Betriebsbremszylinder druckbeaufschlagt sein können, ist es in der Vergangenheit wiederholt dazu gekommen, dass ein Fahrer vergisst, die Entlüftungsstellung des Parkventils manuell herbeizuführen. Dieses Versäumnis hat aber zur Folge, dass bei erneutem Einwirken des Versorgungsteitungsdrucks infolge eines erneuten Ankoppelns der Versorgungsleitung an ein Zugfahrzeug die Notbremsfunktion aufgehoben wird, was eine Entlüftung der Betriebsbremszylinder zur Folge hat. In diesem Zustand ist der Anhänger ohne die gebotene vorherige manuelle Betätigung des Parkventils ungebremst, was eine Gefahrensituation herbeiführen kann, die schlimmstenfalls tödlich für den Fahrer sein kann.

Zur Vermeidung dieser Gefahrensituation schlägt EP 0 792 783 B1 ein modifiziertes Parkventil vor, in dem ein Ventilkörper, hier ein Ventilschieber, in einer Entlüftungsstellung einen zu den Federspeicher-Bremszylindern führenden Parkbremsanschluss entlüftet und in einer Belüftungsstellung eine Belüftung des Parkbremsanschlusses und damit der Federspeicher-Bremszylinder aus dem Behälter ermöglicht. Eine Betätigungsfeder beaufschlagt den Ventilkörper derart, dass sich dieser in entspanntem Zustand der Betätigungsfeder in der Entlüftungsstellung befindet, während die Beaufschlagung der Betätigungsfeder in Richtung der Belüftungsstellung zunimmt. Zur automatischen Herbeiführung einer Entlüftungs- oder Parkstellung in einer Notbremssituation schlägt die Druckschrift eine in das Parkventil integrierte Notbremseinheit vor, die dafür Sorge trägt, dass für ausreichenden Druck in der Versorgungsleitung unter Beaufschlagung der Betätigungsfeder das Ventilelement in der Belüftungsstellung gehalten werden kann, in welcher die Federspeicher-Bremszylinder belüftet sind. Hierzu besitzt die Notbremseinheit einen Kolben, der vom Druck in der Versorgungsleitung beaufschlagt ist. Der druckbeaufschlagte Kolben erzeugt eine Kraft, die für anliegenden Druck in der Versorgungsleitung entgegen der Wirkung der Betätigungsfeder den Ventilkörper in der Belüftungsstellung hält. Mit zumindest teilweiser Entlüftung der Versorgungsleitung mit Eintritt der Notbremssituation entfällt diese Kraft zumindest teilweise, so dass die Betätigungsfeder den Ventilkörper in die Entlüftungsstellung schiebt, in der die Federspeicher-Bremszylinder automatisch entlüftet werden.

Kurz zusammengefasst basiert EP 0 792 783 B1 somit auf dem Grundgedanken, neben einem Anhängerbremsventil bzw. Relaisventil mit integrierter Notbremseinheit auch das Parkventil mit einer Notbremseinheit auszustatten, welche zur Folge hat, dass das Parkventil mit Einbruch des Druckes in der Versorgungsleitung - sei es in einem Notfall oder in einer echten Parksituation - automatisiert in einer Park- oder Entlüftungsstellung verbracht wird. Soll nach dem Wiederankoppeln des Kupplungskopfes Vorrat der Fahrbetrieb wieder aufgenommen werden, muss der Fahrer manuell über den Betätigungsknopf die Notbremsfunktion des Parkventils wieder aufheben, indem das Parkventil wieder manuell in die Belüftungsstellung gebracht wird.

EP 0 792 783 B1 ist darüber hinaus zu entnehmen, dass in der Notbremssituation eine Addition der Kräfte der Betriebsbremszylinder und der Federspeicher-Bremszylinder bei gleichzeitiger Belüftung der Betriebsbremszylinder und Entlüftung der Federspeicher-Bremszylinder infolge der Entlüftung über das Parkventil in der Entlüftungsstellung dadurch vermieden werden kann, dass ein Wechselventil vorgesehen ist. Der Ausgang dieses Wechselventils ist (hier über ein Schnelllöseventil) mit den Federspeicher-Bremszylindern verbunden, während ein erster Eingang des Wechselventils mit dem Parkventil und ein zweiter Eingang des Wechselventils mit den Betriebsbremszylindern bzw. dem Relaisventil, welches der Erzeugung eines Bremsdruckes für die Betriebsbremszylinder dient, verbunden ist. Durch den Einsatz des Wechselventils wird in einer Notbremssituation, in welcher das Parkventil automatisch in die Entlüftungsstellung gebracht wird, infolge des höheren an den Betriebsbremszylindern anliegenden Druckes der Federspeicher-Bremszylinder nicht entlüftet, sondern mit dem Betriebsbremsdruck beaufschlagt, so dass für ausreichenden Druck in dem Behälter die Entlüftung der Federspeicher-Bremszylinder (zumindest teilweise) verhindert ist.

Aus EP 1 188 634 B1 ist eine Anhänger-Druckluftbremsanlage bekannt, bei welcher ein Anhängerbremsventil einerseits über einen Kupplungskopf Bremse mit einem Bremssteuerdruck beaufschlagt wird sowie andererseits über ein Löseventil je nach Stellung des Löseventils wahlweise mit dem Druck eines Behälters des Anhängers oder dem Druck an einem Kupplungskopf Vorrat bzw. der Versorgungsleitung versorgt wird. Die Anhänger-Druckluftbremsanlage besitzt eine einzige Notbremseinheit, die in das Anhängerbremsventil integriert ist und sowohl mit den Federspeicher-Feststellbremsen als auch mit den Betriebsbremsen in Wechselwirkung steht. Das Anhängerbremsventil führt in einer Betriebsstellung "Fahrt" den Bremssteuerdruck, ggf. unter Zwischenschaltung eines Modulators, den Betriebsbremsen zu, womit eine geregelte Bremsung des Anhängers je nach der Pedalstellung des Bremspedals in dem Zugfahrzeug und damit je nach Bremssteuerdruck ermöglich ist. Die Federspeicher-Feststellbremsen des Anhängers sind über ein Parkventil und das Anhängerbremsventil mit einem darin angeordneten Rückschlagventil mit einem Behälter des Anhängers verbunden. In einer Stellung "Parken" des Parkventils, nämlich einer Entlüftungsstellung desselben, können über das Parkventil die Federspeicherkammern der Federspeicher-Feststellbremsen entlüftet werden, womit diese aktiviert sind. In einer Belüftungsstellung des Parkventils in der Betriebsstellung "Fahrt" des Anhängerbremsventils kann Druckluft aus dem Behälter über das Rückschlagventil und das Parkventil zu den Federspeicherkammern der Federspeicher-Feststellbremsen gelangen, womit diese gelöst werden. Kommt es zu einer Notbremssituation, so schaltet die Notbremseinheit das Anhängerbremsventils um in eine Notbremsstellung. In dieser erfolgt die Versorgung der Betriebsbremskammern der Betriebsbremsen nicht mehr mit dem Bremssteuerdruck. Vielmehr wird den Betriebsbrernskammern Druckluft aus dem Behälter des Anhängers zugeführt, womit bei ausreichender Befüllung des Behälters noch eine geregelte Bremsung über die Betriebsbremse ermöglicht ist. Gleichzeitig schafft die Notbremseinheit des Anhängerbremsventils eine das Rückschlagventil umgehende Bypassleitung, welche zur Folge hat, dass die Federspeicherkammern der Federspeicher-Feststellbremsen über das Parkventil in der Stellung "Fahrt" mit dem Behälter verbunden sind. Fällt der Druck in dem Behälter ab, führt dies zu einer verringerten Bremskraft an den Betriebsbremsen, welche wieder ausgeglichen werden kann dadurch, dass in den Federspeicherkammern ebenfalls der Behälterdruck wirkt, so dass die Verringerung des Behälterdrucks ein zunehmendes Betätigen der Federspeicher-Feststellbremsen zur Folge hat. Die aus EP 1 188 634 B1 bekannten Ausführungsformen nutzen somit die Notbremseinheit des Anhängerbremsventils für die gemeinsame Steuerung einer Notbremsfunktion sowohl der Betriebsbremse als auch der Federspeicher-Feststellbremse.

Aus dem gattungsbildenden Stand der Technik in Form der Patentanmeldungen DE 10 2007 053 764 A1 und DE 10 2007 053 765 A1 der Anmelderin sind Anhänger-Druckluftbremsanlagen bekannt, in welchen die Kombination eines Anhängerbremsventils mit einem Löseventil sowie einem Parkventil eingesetzt ist. Das Parkventil besitzt hierbei eine Belüftungsstellung, in welcher die Federspeicherkammer der Federspeicher-Feststellbremse über ein Wechselventil und das Parkventil mit einem Anschluss des Anhängerbremsventils verbunden ist. Des Weiteren besitzt das Parkventil eine Entlüftungsstellung, in welcher die Federspeicherkammer mit einer Entlüftung verbunden wird, um die Parkbremse zu betätigen. Das Parkventil ist manuell über ein Betätigungsorgan von der Belüftungsstellung in die Entlüftungsstellung (und umgekehrt) umschaltbar. Im Fahrbetrieb wird durch das Anhängerbremsventil ein Eingangsanschluss des Parkventils belüftet, der durch das Parkventil in der Belüftungsstellung mit den Federspeicherkammern der Federspeicher-Feststellbremsen verbunden ist, so dass die Federspeicher-Feststellbremsen gelöst sind. Das Anhängerbremsventil besitzt eine Notbremseinheit, über welche bei einem Abkoppeln oder Abriss des Kupplungskopfes Vorrat der Eingangsanschluss des Parkventils mit dem Behälter verbunden werden kann. Gleichzeitig gewährleistet die Notbremseinheit des Anhängerbremsventils die Beaufschlagung der Betriebsbremsen mit dem Druck des Behälters.

Darüber hinaus schlagen diese Druckschriften DE 10 2007 053 764 A1 und DE 10 2007 053 765 A1 vor, auch in dem Parkventil eine Notbremseinheit vorzusehen. Diese ist gebildet mit einem Ringkolben, welcher auf einer Seite durch eine Druckfeder beaufschlagt ist, während die andere Seite des Ringkolbens mit dem Druck an dem Kupplungskopf Vorrat bzw. der Versorgungsleitung beaufschlagt ist. Ein Stößel eines Ventilkörpers des Parkventils tritt unter Ermöglichung einer relativen Gleitbewegung durch den Ringkolben hindurch. Der Stößel besitzt eine Mitnehmerfläche, über welche bei Anlage des Ringkolbens an dieselbe eine Bewegung des Ringkolbens auf das Ventilelement des Parkventils in Richtung der Entlüftungsstellung des Ventilkörpers übertragbar ist. Hingegen kann sich mit der genannten relativen Gleitbewegung der Ringkolben von der Mitnehmerfläche lösen, während der Ventilkörpers in der Entlüftungsstellung verbleibt. Befindet sich das Parkventil in der Entlüftungsstellung, führt die Druckbeaufschlagung des Kupplungskopfes Vorrat und damit des Ringkolbens dazu, dass der Ringkolben entgegen der Druckfeder relativ zu dem Stößel verschoben wird, womit sich dieser von der Mitnehmerfläche löst. Soll die Parkbremse gelöst werden, muss manuell das Ventilelement betätigt werden, womit der Stößel wiederum eine Relativbewegung gegenüber dem Ringkolben ausführt, bis der Ringkolben in der Belüftungsstellung des Ventilkörpers zur Anlage kommt an die Mitnehmerfläche. Kommt es zu einem Einbruch des Drucks an dem Kupplungskopf Vorrat, schiebt die beaufschlagte Druckfeder den Ringkolben und über die Mitnehmerfläche auch den Ventilkörper zurück von der Belüftungsstellung in die Entlüftungsstellung. Somit löst der Einbruch des Drucks an dem Kupplungskopf Vorrat eine Abbremsung über die Federspeicher-Feststellbremse aus. Eine in einer Notbremssituation derart eingenommene Notbremsstellung des Parkventils mit betätigter Federspeicher-Feststellbremse kann auch bei erneuter Beaufschlagung des Kupplungskopfs Vorrat und damit des Ringkolbens lediglich aufgehoben werden, indem das Betätigungsorgan des Parkventils manuell betätigt wird. Dies bedeutet, dass der Fahrer nach einer Notbremssituation oder auch nach einem Abkuppeln des Anhängers nicht nur die ordnungsgemäße Druckluftversorgung der Versorgungsleitung gewährleisten muss, insbesondere durch Ankoppeln des Kupplungskopfes Vorrat, sondern vielmehr auch dafür Sorge tragen muss, dass das Parkventil manuell wieder in die Belüftungsstellung überführt wird. Vergisst der Fahrer dieses, hat dies zur Folge, dass das Zugfahrzeug mit gebremstem Anhänger die Fahrt antritt, was zu Beschädigungen der Reifen führen kann.

DE 102 35 707 A1 offenbart ein Kombiventil für Anhängefahrzeuge mit Federspeicher-Feststellbremse. Das Kombiventil verfügt über einen Steueranschluss, welcher über eine Versorgungsleitung mit einem Kupplungskopf Vorrat verbunden ist. Dieser Steueranschluss ist permanent über ein in das Kombiventil integriertes Rückschlagventil mit einem mit einem Behälter verbundenen Behälteranschluss verbunden. Zwischen den Behälteranschluss und einen Parkbremsanschluss, welcher mit der Federspeicher-Feststellbremse verbunden ist, ist ein kombiniertes Einlassventil/Auslassventil zwischengeordnet. Das Einlassventil verfügt über eine Einlassstellung, in welcher dieses den Behälteranschluss mit dem Parkbremsanschluss verbindet, sowie eine Sperrstellung. Hingegen verfügt das Auslassventil über eine Auslassstellung, in welcher das Auslassventil den Parkbremsanschluss mit einer Entlüftung verbindet, sowie eine Sperrstellung. Das Einlassventil kann über einen Notbremskolben für hinreichenden Druck an dem Steueranschluss automatisch in die Einlassstellung überführt werden, während mit einem Druckabfall an dem Steueranschluss der Notbremskolben automatisch die Sperrstellung des Einlassventils herbeiführt und die Auslassstellung des Auslassventils herbeiführt. Durch manuelle Betätigung eines Betätigungsorgans kann darüber hinaus unabhängig von dem Druck an dem Steueranschluss das Auslassventil in die Auslassstellung überführt werden, womit eine Parkstellung herbeigeführt ist.

### AUFGABE DER ERFINDUNG

Der vorliegenden Erfindung liegt die Aufgabe zugrunde, eine Parkbremseinrichtung und eine Anhänger-Druckluftbremsanlage mit einer derartigen Parkbremseinrichtung vorzuschlagen, welche einerseits eine Notbremsfunktion über die Federspeicher-Feststellbremse gewährleistet, u. U. in Ergänzung durch eine Notbremsfunktion über die Betriebsbremse, und andererseits eine vereinfachte Bedienung mit einer erhöhten Bediensicherheit gewährleistet.

### LÖSUNG

Die Aufgabe der Erfindung wird gelöst mit einer Parkbremseinrichtung gemäß Anspruch 1. Des Weiteren wird die Aufgabe der Erfindung gelöst durch eine pneumatische Anhänger-Druckluftbremsanlage gemäß Anspruch 2. Weitere Ausgestaltungen einer erfindungsgemäßen Anhänger-Druckluftbremsanlage ergeben sich entsprechend den abhängigen Ansprüchen 3 bis 13.

### BESCHREIBUNG DER ERFINDUNG

Die Erfindung schlägt eine Parkbremsventileinrichtung vor, welche allein der Steuerung des Betriebszustands (mindestens) einer Federspeicher-Feststellbremse dient, also nicht der Steuerung des Betriebszustands einer Betriebsbremse, wobei auch möglich ist, dass die Parkbremsventileinrichtung mit der Ausnahme, dass diese die Steuerung des Betriebszustands der Betriebsbremse in jedem Fall nicht ganz oder teilweise übernimmt, unter Umständen auch weitere Funktionen erfüllen kann.

Die Parkbremsventileinrichtung verfügt über ein Parkventil, das ein Betätigungsorgan, insbesondere einen Betätigungsknopf, besitzt, über den ein Ventilkörper, insbesondere ein Ventilschieber oder ein Ventilkörper eines Sitzventils oder ein Stößel zur Betätigung eines Ventilschiebers oder Ventilkörpers eines Sitzventils, manuell in eine Belüftungsstellung und/oder in eine Entlüftungsstellung bewegbar ist. Damit kann das Parkventil einerseits das manuelle Betätigen und Lösen der Federspeicher-Feststellbremse ermöglichen.

Darüber hinaus besitzt die Parkbremsventileinrichtung eine Notbremseinheit, die bei einem Druckabfall an einem Steueranschluss automatisch einen mit einer Federspeicher-Feststellbremse verbundenen Parkanschluss des Parkventils mit einer Entlüftung oder einem Behälter des Anhängers verbindet. Somit gewährleistet die Notbremseinheit bei dem Abkuppeln des Kupplungskopfs Vorrat und/oder in einer Notbremssituation mit einem Abriss des Kupplungskopfes Vorrat oder einem Druckabfall in Folge eines schleichenden Druckluftverlustes an dem Kupplungskopf Vorrat oder der hiermit verbundenen Versorgungsleitung eine automatische Betätigung der Federspeicher-Feststellbremse. Erfolgt die Verbindung des Parkbremsanschlusses nicht mit einer Entlüftung, sondern mit einem Behälter des Anhängers, ist die automatische Betätigung der Federspeicher-Feststellbremse von dem Befüllungszustand des Behälters abhängig.

In der Parkbremseinrichtung können das Parkventil einerseits und die Notbremseinheit andererseits in einem gemeinsamen Modul oder Gehäuse angeordnet sein. Ebenfalls möglich ist, dass das Parkventil und die Notbremseinheit als separate, miteinander koppelbare, beispielsweise aneinander anflanschbare Module ausgebildet sind. Auch möglich ist, dass das Parkventil und die Notbremseinheit als separate Bauelemente ausgebildet sind, die über pneumatische Leitungen miteinander verbunden sind.

Erfindungsgemäß ist bei einem Druckanstieg an dem Steueranschluss automatisch eine Veränderung des Betriebszustands der Parkbremsventileinrichtung herbeiführbar, welche zur Folge hat, dass der Parkbremsanschluss des Parkventils mit Druckluft versorgt wird. Während gemäß dem Stand der Technik das Parkventil keine Notbremseinheit besitzt (EP 1 188 635 B1) oder das Parkventil eine Notbremseinheit besitzt, welche den Ventilkörper lediglich bei einem Druckabfall betätigt (DE 10 2007 053 764 B4, DE 10 2007 053 765 A1, EP 0 792 783 B1), reagiert erfindungsgemäß die Parkbremsventileinrichtung auch bei einem Druckanstieg an dem Steueranschluss. Hierdurch kann eine manuelle Betätigung des Parkventils nach einer Notbremssituation entbehrlich sein, wodurch eine signifikante Vereinfachung der Betätigung der Parkbremsventileinrichtung und der damit ausgestatten Anhänger-Druckluftbremsanlage gewährleistet ist.

Um ein weiteres nicht beschränkendes Beispiel für mit der erfindungsgemäßen Ausgestaltung verbundene Vorteile zu nennen, kann möglicherweise in einer Anhänger-Druckluftbremsanlage lediglich temporär der Druck an dem Steueranschluss abfallen. Für die Ausgestaltungen gemäß dem Stand der Technik erfolgt dann unter Umständen zwingend eine Notbremsung bis zum Stillstand des Anhängers, während erfindungsgemäß mit lediglich einem temporären Druckabfall mit anschließendem Wiederanstieg des Drucks eine eingeleitete Notbremsung wieder aufgehoben werden kann und der Fahrbetrieb fortgesetzt werden kann. Wird erfindungsgemäß der Parkbremsanschluss des Parkventils mit Druckluft nach einem Druckanstieg an dem Steueranschluss der Parkbremsventileinrichtung versorgt, kann dies unmittelbar die Belüftung der Federspeicher-Feststellbremse zur Folge haben, indem die Druckluft von dem Parkbremsanschluss an die Federspeicher-Feststellbremse durchgeleitet wird. Ebenfalls möglich ist, dass die Weiterleitung der Druckluft von dem Parkbremsanschluss zu der Federspeicher-Feststellbremse von weiteren Betriebsparametern abhängig ist.

Im Sinne der vorliegenden Erfindung wird unter einem "Druckabfall" (oder einem "Druckanstieg") insbesondere verstanden, dass der Druck an dem Steueranschluss einen absoluten Schwellwert unterschreitet (oder überschreitet). Ebenfalls möglich ist, dass der Druckabfall (oder Druckanstieg) eine vorgegebene Druckänderung von einem ersten Druckwert zu einem zweiten Druckwert ist oder diese überschreitet.

Gemäß dem Stand der Technik besitzt das Parkventil eine Notbremseinheit, bei welcher ein Ventilkörper, dort ein Ringkolben, zumindest in Teilbetriebsbereichen mechanisch mit dem Ventilkörper des Parkventils gekoppelt ist (DE 10 2007 053 764 B4, DE 10 2007 053 765 A1, EP 0 792 783 B1). Im Gegensatz hierzu schlägt die Erfindung vor, dass die Notbremseinheit der Parkbremsventileinrichtung einen Ventilkörper besitzt, der mechanisch (in sämtlichen Betriebsstellungen) von dem Ventilkörper des Parkventils entkoppelt ist. Durch die Entkopplung der beiden Ventilkörper können die Möglichkeiten für die Betriebsstellungen der Parkbremsventileinrichtung erweitert werden, die Steuerungsmöglichkeiten für Betriebsstellungen erweitert werden und Möglichkeiten für eine konstruktive Gestaltung der pneumatischen Bedingungen für die Einnahme der Betriebsstellung des Ventilkörpers der Notbremseinheit einerseits und der Betriebsstellung des Ventilkörpers des Parkventils andererseits erweitert werden. Insbesondere erfolgt erfindungsgemäß anstelle der (zumindest in Teilbetriebsbereichen) mechanischen Kopplung der beiden Ventilkörper eine rein pneumatische Kopplung der beiden Ventilkörper.

Gemäß den Druckschriften DE 10 2007 053 764 B4 und DE 10 2007 053 765 A1 sowie EP 0 792 783 B1 erfolgt die Entlüftung der Federspeicher-Feststellbremse in der Notbremssituation oder beim Abkoppeln dadurch, dass das Parkventil von der Belüftungsstellung in die Entlüftungsstellung überführt wird. Im Gegensatz hierzu schlägt die Erfindung vor, dass auch bei einem Druckabfall an dem Steueranschluss der Parkbremsventileinrichtung das Parkventil seine Belüftungsstellung beibehält, in welcher ein Eingangsanschluss des Parkventils mit dem Parkanschluss (und damit der Federspeicher-Feststellbremse) verbunden ist. Um dennoch eine Entlüftung der Federspeicher-Feststellbremse herbeiführen zu können, beeinflusst die erfindungsgemäße Parkbremsventileinrichtung die Druckverhältnisse an dem Eingangsanschluss des Parkventils wie folgt:
- Bei einem Druckabfall an dem Steueranschluss in der Notbremssituation verbindet die Notbremseinheit den Eingangsanschluss des Parkventils mit einer Entlüftung oder dem Behälter, so dass trotz Belassen des Parkventils in der Belüftungsstellung die Federspeicher-Feststellbremse sofort entlüftet wird oder auf das Niveau des Behälters entlüftet wird. Damit realisiert die Erfindung auf gegenüber dem genannten Stand der Technik abweichende Weise die Entlüftung der Federspeicher-Feststellbremse mit Eintritt der Notbremssituation oder dem Druckverlust an dem Kupplungskopf Vorrat.
- Bei einem Druckanstieg an dem Steueranschluss, also insbesondere bei dem Überschreiten eines Druckschwellwerts oder einer Druckänderung in einem vorgegebenen Ausmaß, versorgt die Notbremseinheit den Eingangsanschluss des Parkventils mit Druckluft, was vorzugsweise durch Verbinden des Eingangsanschlusses des Parkventils mit dem Behälter des Anhängers oder der Versorgungsleitung erfolgt.

Das erfindungsgemäße Belassen des Parkventils in der Belüftungsstellung und Versorgung des Steueranschlusses des Eingangsanschlusses des Parkventils mit Druckluft bei einem Druckanstieg hat eine Funktion zur Folge, welche gemäß dem Stand der Technik nicht möglich ist:
Während gemäß DE 10 2007 053 764 A1 und DE 10 2007 053 765 A1 nach der Notbremssituation zwingend erforderlich war, dass das Parkventil von der Entlüftungsstellung oder Notbremsstellung manuell wieder in die Belüftungsstellung überführt wird, wird eine derartige zwingend erforderliche manuelle Betätigung gemäß dieser Ausgestaltung der Erfindung vermieden. Erfindungsgemäß ist die Notbremseinheit geeignet ausgebildet, so dass diese bei einem (erneuten) Druckanstieg an dem Steueranschluss der Notbremseinheit nach einem vorherigen Druckabfall mit automatischer Entlüftung der Federspeicher-Feststellbremse auf Veranlassung der Notbremseinheit automatisch den Anschluss des Parkventils (wieder) mit Druckluft versorgt. Hierdurch kann ein Arbeitsschritt für den Benutzer, hier den Fahrer, eingespart werden. Andererseits wird die Bediensicherheit erhöht, da der Fahrer nicht aus Versehen das Parkventil nach dem Wiederankoppeln des Kupplungskopfes Vorrat das Parkventil in der Entlüftungsstellung belassen kann. Die Gefahr von Beschädigungen der Reifen oder von unkontrollierten Betriebszuständen des mit der Parkbremseinrichtung ausgestatteten Anhängers wird somit erfindungsgemäß signifikant verringert.

Bei einem erfindungsgemäßen Schwellwert, für welchen mit dem Druckanstieg an dem Steueranschluss der Notbremseinheit der Parkbremsventileinrichtung automatisch die Versorgung des Anschlusses des Parkventils mit Druckluft erfolgt, kann es sich um denselben Schwellwert handeln, für welchen bei einem Druckabfall automatisch der Anschluss des Parkventils mit der Entlüftung verbunden wird. Auch möglich ist aber, dass für die automatische Veränderung der Stellung der Notbremseinheit für den Druckabfall einerseits und den Druckanstieg andererseits unterschiedliche Schwellwerte verwendet werden. Beispielsweise kann die Notbremseinheit so über eine Art Hysterese verfügen. Eine derartige Hysterese ist insbesondere von Vorteil, wenn an dem Steueranschluss der Behälterdruck wirkt und für das Auslösen der Notbremsfunktion ein verhältnismäßig niedriger Schwellwert gewählt wird, so dass noch in einem breiten Betriebsbereich die übliche geregelte Bremsfunktion über die Betriebsbremse genutzt werden kann, ohne dass die Federspeicher-Feststellbremse wirksam wird. Andererseits kann ein höherer Schwellwert genutzt werden, um mit dem Druckanstieg die automatische Versorgung des Anschlusses des Parkventils mit Druckluft auszulösen, so dass nach einer Notbremssituation diese Versorgung erst erfolgt, wenn hinreichend Druck in der Druckluftbremsanlage und dem Behälter vorhanden und aufgebaut ist. Auf diese Weise kann unter Umständen auch vermieden werden, dass ein Losfahren des Nutzfahrzeugs mit Anhänger erfolgt, während der Druck in dem Behälter noch nicht ausreichend ist, um die Federspeicher-Feststellbremse vollständig zu lösen.

Die erfindungsgemäße Parkbremseinrichtung kann in Kombination mit beliebigen Bauelementen Einsatz finden. Für eine besondere Ausgestaltung der Erfindung findet die erfindungsgemäße Parkbremseinrichtung Einsatz in einer pneumatischen Anhänger-Druckluftbremsanlage, welche zusätzlich zu der genannten Notbremseinheit der Parkbremsventileinrichtung eine weitere Notbremseinheit besitzt. Diese weitere Notbremseinheit ist für die Erzeugung einer Notbremswirkung in Verbindung mit den Betriebsbremsen des Anhängers wirksam. Somit kann erfindungsgemäß über separate Notbremseinheiten einerseits auf die Federspeicher-Feststellbremsen und andererseits auf die Betriebsbremsen eingewirkt werden. Hierbei ermöglicht die Erfindung durch die separate Ausgestaltung der Notbremseinheit der Parkbremseinrichtung einer-seits und der weiteren Notbremseinheit andererseits vielfältige Gestaltungsmöglichkeiten, bspw. mit
- einem gleichzeitigen Einsatz der Notbremsung über die Betriebsbremsen und die Federspeicher-Feststellbremsen, so dass konstruktiv der beiden Notbremseinheiten mit denselben Schwellwerten oder Umschaltdrücken ausgestaltet sind,
- oder auch einer nacheinander erfolgenden Betätigung der Betriebsbremsen und der Federspeicher-Feststellbremsen (oder Lösen) infolge unterschiedlicher Umschaltdrücke der beiden Notbremseinheiten, wobei vorzugweise der Umschaltdruck der weiteren Notbremseinheit größer ist als der Umschaltdruck der Notbremseinheit der Parkbremsventileinrichtung.

Erfindungsgemäß nimmt die weitere Notbremseinheit bei einem Druckabfall an einem Steueranschluss automatisch eine Notbremsstellung ein. In dieser Notbremsstellung werden die Betriebsbremsen des Anhängers druckbeaufschlagt, was aus einem Behälter erfolgt. Kommt es zu einem Druckanstieg an dem Steueranschluss der weiteren Notbremseinheit, verlässt dieser automatisiert die Notbremsstellung, womit die Druckbeaufschlagung der Betriebsbremsen des Anhängers beseitigt wird. Vorzugsweise erfolgt dann ggf. eine Beaufschlagung der Betriebsbremsen des Anhängers über die weitere Notbremseinheit mit dem Bremssteuerdruck. Möglich ist allerdings auch, dass die Beaufschlagung der Betriebsbremsen mit einem Ausgangsdruck eines Relaisventils erfolgt, der und welches durch den Bremssteuerdruck gesteuert wird.

Durch den Einsatz von zwei Notbremseinheiten kann erfindungsgemäß eine redundante Notbremsfunktion gewährleistet werden. Fällt eine Notbremseinheit aus, kann die Abbremsung des Fahrzeuges noch über die andere Notbremseinheit erfolgen. Auf diese Weise kann einer Beeinträchtigung der Funktion einer Notbremseinheit, beispielsweise durch
- einen Verschleiß,
- ein "Verklemmen" eines Ventilelements,
- einen Federbruch,
- Verschmutzung,
- Korrosion

u. ä. durch die Funktion der anderen Notbremseinheit entgegengewirkt werden. Beispielsweise wird gemäß EP 1 188 634 B1 lediglich durch eine einzige Notbremseinheit, hier in Ausgestaltung als Schieberventil, die Notbremsfunktion gewährleistet, die gleichzeitig für die pneumatische Beaufschlagung der Federspeicher-Feststellbremsen und der Betriebsbremsen verantwortlich ist. Kommt es hier zu einer Blockierung des Freiheitsgrads des Ventilschiebers oder zu einem Bruch der zur Verschiebung des Ventilschiebers eingesetzten Druckfeder, kann jedwede Notbremsfunktion durch diese Notbremseinheit nicht mehr gewährleistet werden.

Erfindungsgemäß sind in den beiden Notbremseinheiten insbesondere jeweils einzelne Steueranschlüsse eingesetzt (wobei diese durchaus auch mit denselben Drucken beaufschlagt werden können). Für eine Ausgestaltung der Erfindung ist der Steueranschluss der Notbremseinheit der Parkbremseinrichtung mit der Versorgungsleitung verbunden. Auf diese Weise reagiert die Notbremseinheit der Parkbremseinrichtung unmittelbar auf einen Einbruch des Drucks in der Versorgungsleitung, also insbesondere auf ein Abkuppeln des Anhängers oder einen Abriss des Kupplungskopfes Vorrat. Damit ist für diese Ausgestaltung die Notbremsfunktion der Notbremseinheit der Parkbremseinrichtung unabhängig von einem etwaigen Befüllungszustand des Behälters des Anhängers.

In weiterer Ausgestaltung der Erfindung ist in der Anhänger-Druckluftbremsanlage ein Löseventil eingesetzt. Eine Ausgangsleitung des Löseventils ist für eine Ausgestaltung der Erfindung sowohl mit dem Steueranschluss der Notbremseinheit als auch mit dem Steueranschluss der weiteren Notbremseinheit verbunden. Dies bedeutet, dass für beide Notbremseinheiten derselbe Druck, nämlich der Druck in der Ausgangsleitung des Löseventils, genutzt wird. Hierbei kann das Umschalten der beiden Notbremseinheiten für Unterschreiten bzw. Überschreiten derselben Druckschwelle erfolgen, wobei allerdings durchaus möglich ist, dass die Notbremseinheiten auf unterschiedliche Schaltdrücke ausgelegt sind.

Ein Vorteil der Entnahme von Druckluft zur Ansteuerung der Notbremseinheiten stromabwärts des Löseventils ist, dass die Steuerdrücke der Notbremseinheit auch gemeinsam umgeschaltet werden können, wenn das Löseventil durch manuelle Betätigung umgeschaltet wird. Bricht der Druck an den Steueranschlüssen in der Stellung "Fahrt" des Löseventils ein in einer Notbremssituation, kann für den Stillstand des Fahrzeuges mit Umschalten des Löseventils den Steueranschlüssen beider Notbremseinheiten der Druck aus dem Behälter zugeführt werden, der dann eine Umschaltung der beiden Notbremseinheiten bewerkstelligen kann, womit dann eine Rangieren ermöglicht ist.

In einer Ausgestaltung der Erfindung kann der Steueranschluss der Notbremseinheit der Parkbremseinrichtung mit dem Behälter verbunden sein. In diesem Fall erfolgt nicht unmittelbar die Umschaltung der Notbremseinheit, wenn eine Notbremssituation eintritt. Vielmehr ist die Umschaltung der Notbremseinheit abhängig davon, welcher Druck noch in dem Behälter des Anhängers vorhanden ist. Reicht der Druck aus, um unter Umständen noch eine geregelte Betriebsbremsung durchzuführen, ist ein Umschalten der Notbremseinheit unter Umständen noch nicht erforderlich. Erst wenn der Druck in dem Behälter unterhalb eines Schwellwertes oder Umschaltdruckes der Notbremseinheit der Parkbremseinrichtung gefallen ist, erfolgt die Umschaltung der Notbremseinheit der Parkbremseinrichtung, womit die Federspeicher-Feststellbremsen wirksam werden.

In weiterer Ausgestaltung der Erfindung ist möglich, dass der Steueranschluss der Notbremseinheit der Parkbremseinrichtung mit dem Behälter verbunden ist, während der Steueranschluss der weiteren Notbremseinheit mit der Versorgungsleitung verbunden ist.

Während grundsätzlich möglich ist, dass die Parkbremseinrichtung mit den genannten Bauelementen ausschließlich den genannten Zwecken dient, können in die Parkbremseinrichtung auch weitere Funktionen integriert sein. Um lediglich ein nicht beschränkendes Beispiel zu nennen, kann in die Parkbremseinrichtung, insbesondere in die Notbremseinheit, ein Rückschlagventil integriert sein. Dieses Rückschlagventil kann genutzt werden, um eine Drucksicherung eines Drucks in einer Federspeicherkammer zum Lösen der Federspeicher-Feststellbremse zu gewährleisten. In diesem Fall führt die Umschaltung der Notbremseinheit der Parkbremseinrichtung dazu, dass trotz des Rückschlagventils eine Entlüftung (oder Verbindung mit dem Behälter) erfolgen kann. Hierzu kann beispielsweise eine Bypassleitung geschaffen werden, mit welcher das Parkventil umgangen wird und letztendlich eine Entlüftung oder Verbindung mit dem Behälter erfolgt.

Grundsätzlich möglich ist, dass für die Entlüftung durch das Parkventil und die Notbremseinheit jeweils separate Entlüftungen genutzt werden. Für eine besonders kompakte Ausgestaltung der Erfindung nutzen das Parkventil einerseits und die Notbremseinheit der Parkbremseinrichtung andererseits dieselbe Entlüftung, was beispielsweise durch die genannte Bypassleitung erfolgen kann.

Auch die weitere Notbremseinheit kann an beliebiger Stelle in der Druckluftbremsanlage angeordnet sein. Hierbei kann die weitere Notbremseinheit als separates Bauelement ausgebildet sein, modular ausgestaltet sein oder in ein weiteres Bauelement, bspw. in ein Anhängerbremsventil, integriert sein. Für eine weitere Ausgestaltung der Erfindung ist die weitere Notbremseinheit in ein EBS-Steuergerät integriert. Hierdurch ergibt sich eine besonders kompakte Bauweise. Darüber hinaus möglich ist, dass in dem EBS-Steuergerät weitere Funktionen gewährleistet werden, welche die Notbremseinheit betreffen. Um lediglich ein einfaches Beispiel zu nennen, kann, beispielsweise über ein in der Steuerleitung angeordnetes Magnetventil, die Auslösung der Notbremsfunktion von weiteren Betriebsparametern abhängig gemacht wird, wobei die Betriebsparameter in der EBS-Steuereinheit vorliegen oder ermittelt werden. Ein derartiger möglicher Betriebsparameter ist beispielsweise die Fahrgeschwindigkeit des Anhängers, so dass die Notbremsfunktion mit einem Blockieren der Räder infolge der einsetzenden Federspeicher-Feststellbremse lediglich ausgelöst wird, wenn eine vorgegebene Geschwindigkeit (beispielsweise 5 km/h) unterschritten wird.

Möglich ist, dass die Funktion der Federspeicher-Feststellbremse ausschließlich oder vorrangig durch die Parkbremseinrichtung gesteuert wird. In einer weiteren Ausgestaltung der Erfindung sind zusätzliche Beeinflussungsmöglichkeiten der Betriebsweise der Federspeicher-Feststellbremse gegeben: Für diese Ausgestaltung der Erfindung ist in einer Leitungsverbindung zwischen einem Parkbremsanschluss des Parkventils und der Federspeicher-Feststellbremse mindestens ein Magnetventil angeordnet. Dieses Magnetventil kann je nach Schaltzustand die pneumatische Verbindung zwischen dem Parkbremsanschluss und der Federspeicher-Feststellbremse herstellen, so dass für hinreichenden Druck an dem Parkbremsanschluss die Federspeicher-Feststellbremse gelöst werden kann und der Betriebszustand der Federspeicher-Feststellbremse über das Parkventil und die Notbremseinheit vorgegeben wird. In einem anderen Schaltzustand des mindestens einen Magnetventils kann die Federspeicher-Feststellbremse über das Magnetventil entlüftet sein, womit die Federspeicher-Feststellbremse (unabhängig von der Stellung des Parkventils und der Notbremseinheit) aktiviert ist. Dies kann insbesondere genutzt werden, um die Betätigung der Federspeicher-Feststellbremse von weiteren Betriebszuständen abhängig zu machen, beispielsweise auch von der Geschwindigkeit des Anhängers, wie dies bereits oben erläutert worden ist.

Gemäß einem weiteren Vorschlag der Erfindung ist dem Steueranschluss der Notbremseinheit der Parkbremseinrichtung mindestens ein Magnetventil vorgeordnet. Diese Magnetventil ist durch eine elektrische Steuereinheit ansteuerbar. Somit kann auch die Umschaltung der Notbremseinheit von weiteren Betriebsparametern abhängig gemacht werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbildung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Federspeicher-Feststellbremse die Rede ist, ist dies so zu verstehen, dass genau eine Federspeicher-Feststellbremse, zwei Federspeicher-Feststellbremsen oder mehr Federspeicher-Feststellbremsen vorhanden sein können.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 bis 5**: zeigen schematisiert unterschiedliche Ausgestaltungen einer Anhänger-Druckluft-bremsanlage mit Parkbremsventileinrichtung.
- **Fig. 6 und 7**: zeigen zwei weitere Anhänger-Druckluftbremsanlagen mit Parkbremsventileinrichtungen bei Darstellung der pneumatischen Baueinheiten mit Funktionssymbolen gemäß DIN.
- **Fig. 8 bis 10**: zeigen einen Teil einer weiteren pneumatischen Anhänger-Druckluftbremsanlage mit Parkbremsventileinrichtung in einer schematisierten, aber verallgemeinerte konstruktive Details zeigenden Darstellung.

### FIGURENBESCHREIBUNG

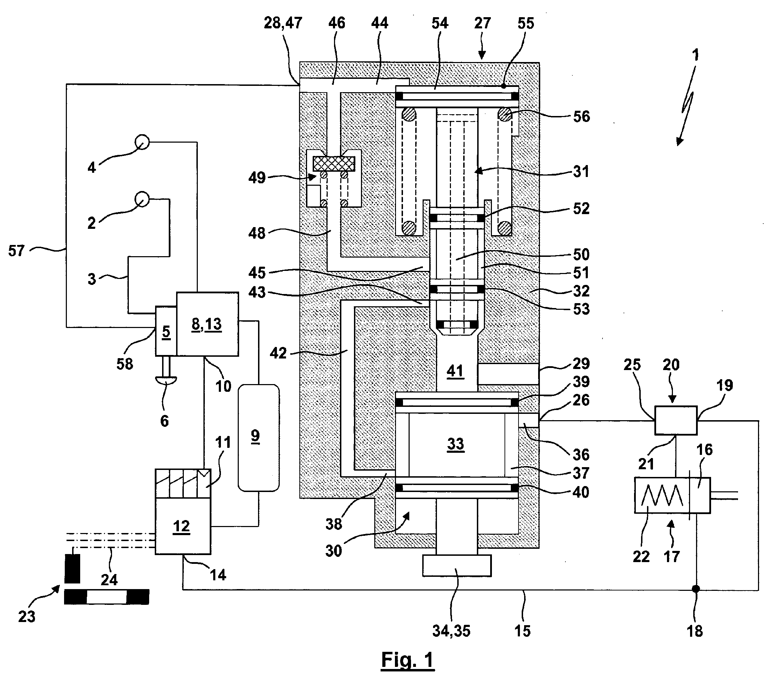

**Fig. 1** zeigt eine pneumatische Anhänger-Druckluftbremsanlage 1. Die Anhänger-Druckluftbremsanlage ist über einen Kupplungskopf Vorrat 2 mit hiervon gespeister Versorgungsleitung 3 einerseits und über einen Kupplungskopf Bremse 4 andererseits mit einem in den Figuren nicht dargestellten Zugfahrzeug in an sich bekannter Weise pneumatisch gekoppelt. Die Anhänger-Druckluftbremsanlage 1 verfügt über ein manuell betätigbares Löseventil 5, welches eine Lösestellung sowie eine Stellung Fahrt besitzt, die manuell durch Betätigung eines Betätigungsknopfes 6 vom Fahrer herbeiführbar sind. Allerdings wird das Löseventil 5 bei druckbeaufschlagter Versorgungsleitung 3 automatisch in die Stellung Fahrt überführt. In der Stellung Fahrt übergibt das Löseventil 5 den Druck in der Versorgungsleitung 3 an einen Eingangsanschluss 7 eines Anhängerbremsventils 8. Hingegen führt das Löseventil 5 in der Lösestellung Druck aus einem Behälter 9 dem Eingangsanschluss 7 des Anhängerbremsventils 8 zu, wozu der Behälter 9 durch das Anhängerbremsventil 8 hindurch mit dem Löseventil 5 verbunden sein kann. Hingegen ist der Eingangsanschluss 7 des Anhängerbremsventils 8 für drucklose Versorgungsleitung 3 und bei Löseventil 5 in der Stellung Fahrt entlüftet.

Das Anhängerbremsventil 8 verfügt über einen Betriebsbremsanschluss 10, an welchen das Anhängerbremsventil 8 den Bremssteuerdruck an dem Kupplungskopf Bremse 4 oder einen hiermit korrelierenden Druck, insbesondere mit einer Relaisfunktion des Anhängerbremsventils 8, weitergibt. Der Betriebsbremsanschluss 10 ist mit einem pneumatischen Steueranschluss 11 einer EBS-Steuereinheit 12 verbunden. In das Anhängerbremsventil 8 ist auch eine Notbremseinheit 13 integriert, welche im Rahmen der vorliegenden Erfindung auch als "weitere Notbremseinheit" bezeichnet ist. Die Notbremseinheit 13 führt in einer Notbremssituation dem Betriebsbremsanschluss 10 anstelle des Bremssteuerdrucks den Druck aus dem Behälter 9 zu. Während im normalen Fahrbetrieb der Druck an dem Steueranschluss 11 abhängig ist von dem Bremssteuerdruck an dem Kupplungskopf Bremse 4 und damit von der Stellung des Bremspedals des Zugfahrzeugs, wird in der Notbremssituation dem Steueranschluss 11 der Druck des Behälters 9 zugeführt, womit (bei ausreichendem Druck in dem Behälter 9) eine Abbremsung des Anhängers über die Betriebsbremse erfolgt. Die EBS-Steuereinheit 12 verfügt über einen Bremsdruckausgabeanschluss 14, welcher über eine Bremsleitung 15 mit Betriebsbremskammern 16, hier eines Kombi-Bremszylinders 17 verbunden ist. Über eine Verzweigung 18 ist der Bremsdruckausgabeanschluss 14 auch mit einem ersten Eingang 19 eines Wechselventils 20 verbunden, dessen Ausgang 21 mit einer Federspeicherbremskammer 22, hier des Kombi-Bremszylinders 17, verbunden ist.

Der Anhänger verfügt über mindestens einen Raddrehzahlsensor 23, dessen Ausgangssignal über eine Signalleitung 24 der EBS-Steuereinheit 12 zugeführt ist. Das Signal des Raddrehzahlsensors 23 wird in der EBS-Steuereinheit 12 beispielsweise zur Modulation der Beaufschlagung der Betriebsbremskammern 16 herangezogen, um eine Fahrstabilisierung zu gewährleisten und eine Antiblockierregelung durchzuführen.

Der zweite Eingang 25 des Wechselventils 20 wird gespeist von einem Parkbremsanschluss 26 einer Parkbremsventileinrichtung 27. Die Parkbremsventileinrichtung 27 besitzt zusätzlich zu dem Parkbremsanschluss 26 einen Steueranschluss 28 sowie eine Entlüftung 29, aber keinen Ausgangsanschluss, der mit einer Betriebsbremse verbunden ist.

Die Parkbremsventileinrichtung 27 ist gebildet mit einem Parkventil 30 und einer Notbremseinheit 31. Für das dargestellte Ausführungsbeispiel sind das Parkventil 30 und die Notbremseinheit 31 in ein gemeinsames Gehäuse 32 integriert, ohne dass dieses zwingend der Fall sein muss. Das Parkventil 30 und die Notbremseinheit 31 sind nicht mechanisch gekoppelt, sondern stehen ausschließlich pneumatisch miteinander in Wechselwirkung, wie im Folgenden noch im Detail erläutert wird.

Das Parkventil 30 ist in an sich bekannter Weise ausgestaltet. Das Parkventil 30 ist beispielsweise gemäß Fig. 1 in Schieberbauart ausgebildet, wobei dies auch alternativ in Sitzbauweise ausgebildet sein kann. Das Parkventil 30 verfügt über einen Ventilkörper 33, welcher außerhalb des Gehäuses 32 über ein Betätigungsorgan 34, hier einen Betätigungsknopf 35, manuell betätigt werden kann. Das Parkventil 30 besitzt zwei Schaltstellungen, nämlich die in Fig. 1 wirksame Belüftungsstellung, in welcher ein mit dem Parkbremsanschluss 26 der Parkbremsventileinrichtung 27 pneumatisch verbundener Parkbremsanschluss 36 des Parkventils 30 über eine Steuernut oder einen Steuerraum 37 mit einem Eingangsanschluss 38 des Parkventils 30 verbunden ist. Der Steuerraum 37 ist axial begrenzt durch Steuerkanten 39, 40, welche für das dargestellte Ausführungsbeispiel mit Dichtringen gebildet sind. Von der erläuterten Belüftungsstellung kann der Ventilkörper 33 und damit das Parkventil 30 in eine Entlüftungsstellung überführt werden, womit die Steuerkante 39 eine dem Parkbremsanschluss 36 zugeordnete Steuerbohrung überfährt. In der Entlüftungsstellung trennt die Steuerkante 39 den Parkbremsanschluss 36 von dem Eingangsanschluss 38. Über innenliegende Kanäle 41 ist in der Entlüftungsstellung des Parkventils 30 der Parkbremsanschluss 36 des Parkventils mit der Entlüftung 29 verbunden. Der Wechsel des Parkventils 30 von der Belüftungsstellung in die Entlüftungsstellung (und umgekehrt) kann lediglich manuell, nicht jedoch pneumatisch herbeigeführt werden.

Der Eingangsanschluss 38 des Parkventils 30 ist über eine Verbindungsleitung 42 mit einem Anschluss 43 der Notbremseinheit 31 verbunden.

Die Notbremseinheit 31 verfügt über einen Steueranschluss 44 sowie einen Versorgungsanschluss 45. Für das in Fig. 1 dargestellte Ausführungsbeispiel werden sowohl der Steueranschluss 44 als auch der Versorgungsanschluss 45 über eine Verzweigung 46 von dem Steueranschluss 28 der Parkbremsventileinrichtung 27, der damit gleichzeitig einen Versorgungsanschluss 47 der Parkbremsventileinrichtung 27 bildet, mit Druckluft versorgt. Hierbei ist in der Versorgungsleitung 48 zwischen der Verzweigung 46 und dem Versorgungsanschluss 45 ein in Richtung des Versorgungsanschlusses 45 öffnendes Rückschlagventil 49 angeordnet.

Die Notbremseinheit 41 verfügt über einen Ventilkörper 50. Der Ventilkörper 50 und damit die Notbremseinheit 31 besitzt eine (in Fig. 1 nicht wirksame) Belüftungsstellung, in welcher ein Steuerraum 51, der axial begrenzt ist durch Steuerkanten 52, 53, den Versorgungsanschluss 45 mit dem Anschluss 43 verbindet. Darüber hinaus besitzt der Ventilkörper 50 und damit die Notbremseinheit 31 eine in Fig. 1 wirksame Entlüftungsstellung, in welcher die Verbindung zwischen dem Versorgungsanschluss 45 und dem Anschluss 43 durch die Steuerkante 53 unterbrochen ist und der Anschluss 43 über Kanäle 41 mit der Entlüftung 29 verbunden ist.

Die Stellung des Ventilkörpers 50 wird rein pneumatisch gesteuert über den Druck an dem Steueranschluss 44. Hierfür besitzt der Ventilkörper 50 in einem Endbereich einen Steuerkolben 54, welcher einen zwischen Steuerkolben 54 und Gehäuse 32 gebildeten Steuerraum 55 begrenzt. Der Steueranschluss 44 mündet in den Steuerraum 55. Eine Druckfeder 56 beaufschlagt den Steuerkolben 54 und damit den Ventilkörper 50 in die Entlüftungsstellung gemäß Fig. 1. Liegt an dem Steueranschluss 44 ein ausreichender Druck an, erzeugt der Druck in dem Steuerraum 55 eine ausreichende Kraft auf den Steuerkolben 54, um den Ventilkörper 50 entgegen der Beaufschlagung durch die Druckfeder 56 von der Entlüftungsstellung gemäß Fig. 1 in die Belüftungsstellung zu überführen. Für das in Fig. 1 dargestellte Ausführungsbeispiel ist der Steueranschluss 28 bzw. der Versorgungsanschluss 47 der Parkbremsventileinrichtung 27 über eine Leitung 57 und einen Anschluss 58 sowie über das Löseventil 5 mit der Versorgungsleitung 3 und mit dem Kupplungskopf Vorrat 2 verbunden.

Die Funktionsweise der Anhänger-Druckluftbremsanlage 1 gemäß Fig. 1 ist wie folgt:
Werden für entleerte Anhänger-Druckluftbremsanlage die Kupplungsköpfe 2, 4 des Anhängers an das Zugfahrzeug angeschlossen, erfolgt zunächst in an sich bekannter Weise eine Befüllung des Behälters 9 über den Kupplungskopf Vorrat 2, das Löseventil 5 und das Anhängerbremsventil 8. Befindet sich das Parkventil 30 in der Entlüftungsstellung, ist die Federspeicher-Feststellbremse betätigt. Erst die manuelle Überführung des Parkventils 30 in die Belüftungsstellung gemäß Fig. 1 ermöglicht überhaupt das Lösen der Federspeicher-Feststellbremse. Allerdings ist das Lösen der Federspeicher-Feststellbremse davon abhängig, dass in der Belüftungsstellung des Parkventils 30 an dem Eingangsanschluss 38 ein hinreichender Druck anliegt, um die Federspeicher-Feststellbremse zu lösen. In der in Fig. 1 dargestellten Schaltstellung der Notbremseinheit 31 ist dies nicht der Fall, da der Eingangsanschluss 38 über die Verbindungsleitung 42, den Anschluss 43 und die Kanäle 41 mit der Entlüftung 29 verbunden ist. Mit sukzessiver Befüllung des Anhängers steigt allerdings der Druck an dem Steueranschluss 28 und damit in dem Steuerraum 55. Überschreitet der Druck an dem Steueranschluss 28 den Umschaltdruck, der erforderlich ist, um die Druckfeder 56 zu überwinden und den Ventilkörper 50 umzuschalten von der Entlüftungsstellung gemäß Fig. 1 in die Belüftungsstellung, verbindet die Notbremseinheit 31 den Versorgungsanschluss 47, der hier dem Steueranschluss 28 entspricht, über das Rückschlagventil 49, den Versorgungsanschluss 45, den Steuerraum 51 mit dem Anschluss 43, womit letztendlich Druckluft von dem Kupplungskopf Vorrat 2 über die Notbremseinheit 41 und das Parkventil 30 sowie das Wechselventil 20 zu der Federspeicherkammer 22 gelangen kann. Bei hinreichendem Druck an dem Steueranschluss 28 bzw. Versorgungsanschluss 47 wird die Federspeicher-Feststellbremse gelöst. Druckschwankungen an dem Steueranschluss 28, welche nicht bewirken, dass die Notbremseinheit 31 die Belüftungsstellung verlässt, werden von den Federspeicherkammern 22 ferngehalten durch das Rückschlagventil 49.

Kommt es zu einer Notbremssituation, sinkt der Druck an dem Steueranschluss 28 ab. Bei Unterschreiten des Umschaltdrucks der Notbremseinheit 31, welcher von der Steifigkeit der Feder 56 und der Steuerfläche des Steuerkolbens 54 abhängt, schaltet die Notbremseinheit 31 automatisch um in die Entlüftungsstellung, womit eine Entlüftung der Federspeicher-Feststellbremse erfolgt, so dass eine Notbremsung durch die Federspeicher-Feststellbremse bzw. die Erzeugung einer Parkbremswirkung bei abgekuppeltem Anhänger ermöglicht ist.

Die Verbindung des Parkanschlusses 26 mit der Federspeicherkammer 22 über das Wechselventil 20 hat, wie eingangs erläutert, den Zweck, die an der Federspeicher-Feststellbremse erzeugte Bremskraft nur so groß zu machen, wie die Bremskraft an der Betriebsbremse absinkt, wenn der Steueranschluss 11 durch die Notbremseinheit 13 des Anhängerbremsventils mit einem nicht mehr ausreichenden Druck des Behälters 9 beaufschlagt wird, womit somit eine Kräfteaddition vermieden wird.

Ohne manuelles Einwirken des Fahrers auf das Parkventil 30 verbleibt dieses in der Notbremssituation in der Belüftungsstellung. Je nach anliegendem Druck an dem Steueranschluss 28, hier also je nach anliegendem Druck an dem Kupplungskopf Vorrat 2, erfolgt automatisiert durch die Notbremseinheit 31 das Betätigen und Lösen der Federspeicherbremse. Wird hingegen manuell das Parkventil 30 in die Entlüftungsstellung überführt, ist die Federspeicher-Feststellbremse in jedem Fall unabhängig von der Schaltstellung der Notbremseinheit 31 entlüftet. Möglich ist, dass für eine Zusammenfassung des Steueranschlusses 28 und des Versorgungsanschlusses 47, wie dies in Fig. 1 dargestellt ist, diese Anschlüsse abweichend zu Fig. 1 nicht mit dem Kupplungskopf Vorrat verbunden sind, sondern vielmehr mit dem Behälter 9.

Ebenfalls möglich ist, dass anstelle der Verzweigung 46 von einem einzigen Anschluss der Steueranschluss 44 mit einem Versorgungsanschluss 28 verbunden ist, während pneumatisch voneinander unabhängig der Versorgungsanschluss 47 der Parkbremsventileinrichtung 27 mit dem Rückschlagventil 49 verbunden ist. In diesem Fall kann der Steueranschluss 28 mit dem Kupplungskopf Vorrat 2 verbunden sein, während der Versorgungsanschluss 47 mit dem Behälter 9 verbunden sein kann. Es versteht sich, dass die genannten Verbindungen unmittelbar hergestellt sein können oder, wie in Fig. 1 dargestellt, über andere Bauelemente wie das Löseventil 5 und/oder das Anhängerbremsventil 8 geführt sind.

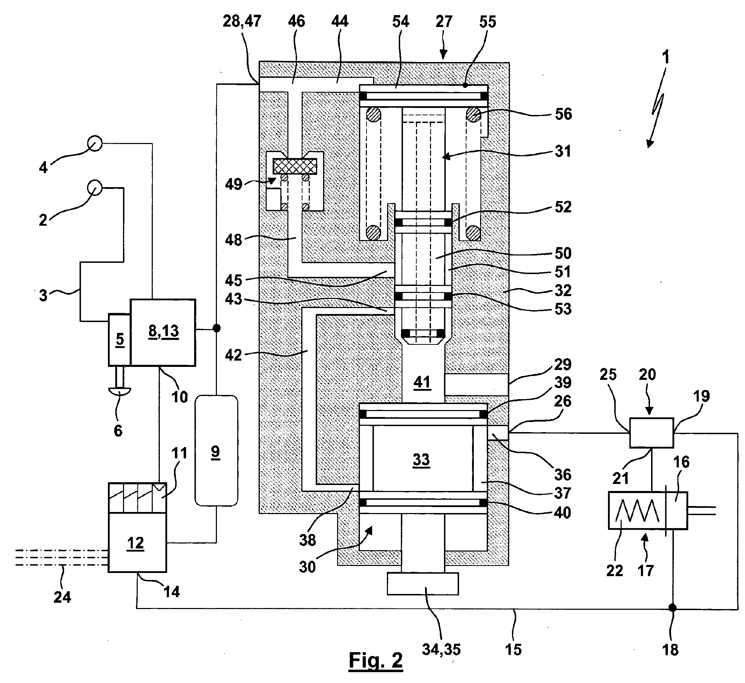

In **Fig. 2** ist eine im Wesentlichen Fig. 1 entsprechende Ausführungsform dargestellt, bei welcher der gemeinsame Steueranschluss 28 und Versorgungsanschluss 47 unmittelbar mit dem Behälter 9 verbunden ist. In diesem Fall kann bei einem Einbruch des Druck an dem Kupplungskopf Vorrat 2 die Notbremseinheit 31 durchaus zunächst die Belüftungsstellung beibehalten, solange der Druck in dem Behälter 9 ausreichend ist. Somit kann zunächst eine Notbremsung des Anhängers ausschließlich über die Betriebsbremse erfolgen, womit auch eine modulierte und geregelte Bremsung möglich ist. Erst wenn der Druck in dem Behälter 9 einen Umschaltdruck der Notbremseinheit 31 unterschreitet, schaltet die Notbremseinheit 31 um von der Belüftungsstellung in die in Fig. 2 dargestellte Entlüftungsstellung. Vorzugsweise wird der Umschaltdruck der Notbremseinheit 31 mindestens so groß gewählt wie der Druck des Behälters, welcher erforderlich ist, um über die Betriebsbremse in der Notbremssituation gerade noch eine zuverlässige Abbremsung des Anhängers zu gewährleisten.

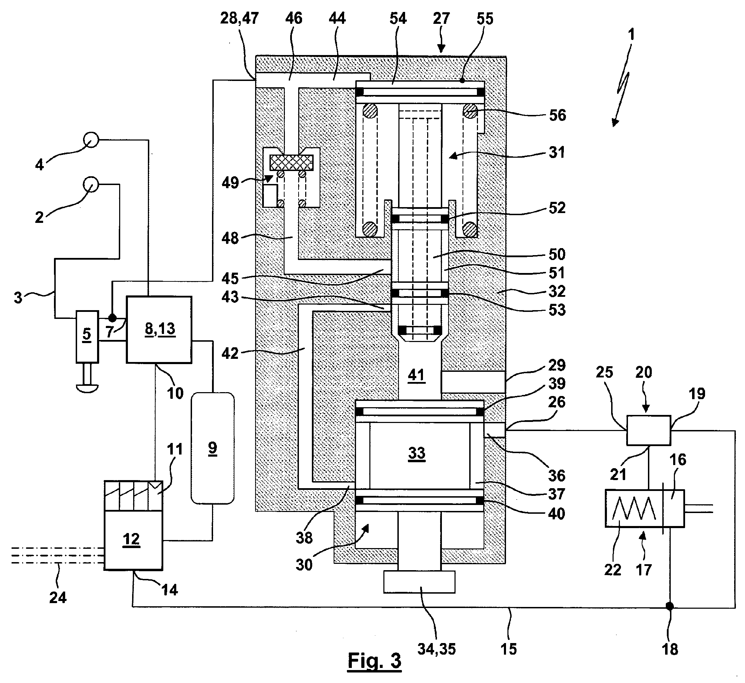

Für das Ausführungsbeispiel gemäß **Fig. 3** sind der Steueranschluss 28 und der Versorgungsanschluss 47 der Parkbremsventileirfrichtung 27 mit dem Eingangsanschluss 7 des Anhängerbremsventils 8 (bzw. einer Verbindungsleitung des ausgangsseitigen Anschlusses des Löseventils 5 mit dem Anhängerbremsventil 8) verbunden. Demgemäß wird in der Stellung Fahrt des Löseventils 5 der Steueranschluss 28 und der Versorgungsanschluss 47 mit dem Druck an dem Kupplungskopf Vorrat 2 beaufschlagt, während in der Lösestellung des Löseventils 5 die Beaufschlagung des Steueranschlusses 28 und des Versorgungsanschlusses 47 über den Behälter 9 (unter Zwischenschaltung des Anhängerbremsventils 8 und des Löseventils 5) erfolgt.

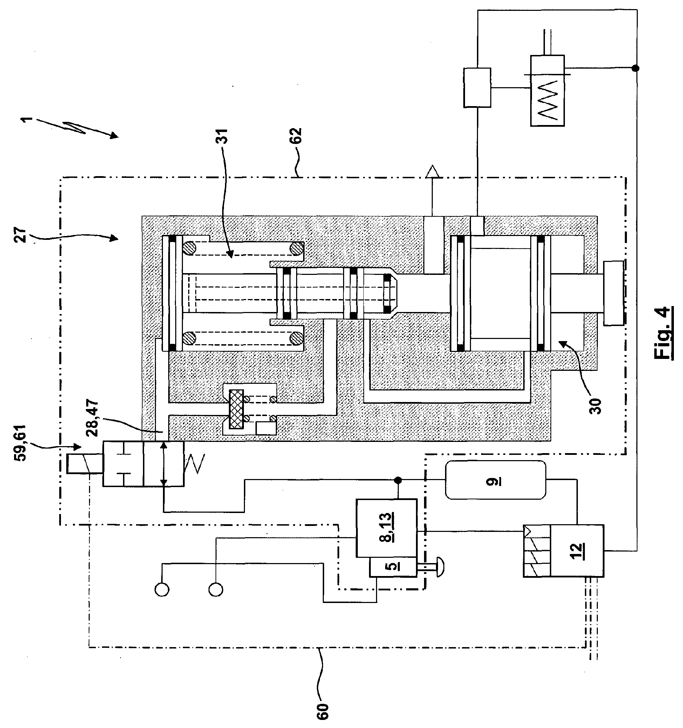

Das Ausführungsbeispiel gemäß **Fig. 4** entspricht im Wesentlichen dem Ausführungsbeispiel gemäß Fig. 2. Allerdings ist hier zwischen dem Behälter 9 und dem Steueranschluss 28 und dem Versorgungsanschluss 47 ein Ventil 49 angeordnet, über welches die Druckverhältnisse an dem Steueranschluss 28 und dem Versorgungsanschluss 47 beeinflusst werden können. Vorzugsweise ist das Ventil 49 elektrisch betätigbar über eine elektrische Steuerleitung 60, wobei das Steuersignal in der Steuerleitung 60 beispielsweise durch die EBS-Steuereinheit 12 erzeugt werden kann. Für das dargestellte Ausführungsbeispiel ist das Ventil 59 als 2/2-Wege-Magnetventil 61 ausgebildet, welches insbesondere ohne Bestromung in Folge der Beaufschlagung durch eine Feder seine Durchlassstellung einnimmt, während dies mit Bestromung der Steuerleitung 60 eine Sperrstellung einnehmen kann. Um lediglich ein Beispiel zu nennen, kann das Lösen der Federspeicher-Feststellbremse bei Parkventil in der Belüftungsstellung auch bei ausreichendem Druck in dem Behälter 9 durch das Ventil 59 in der Sperrstellung unterbunden werden, wenn ein Türsensor, ein Zündungssensor oder ein Fahrersitzbelegungs-Erkennungssensor kein Signal erzeugt, so dass sich beispielsweise der Fahrer nicht in der Fahrerkabine des Zugfahrzeugs befindet. Erst mit einer einmaligen Betätigung der Betriebsbremse, einem Zündsignal, Erkennung der Fahrersitzbelegung u. ä. kann das Ventil 59 in die Durchlassstellung geschaltet werden, womit dann die Notbremseinheit 31 die Belüftungsstellung einnehmen kann. Andererseits kann im Fahrbetrieb die Einleitung einer Notbremsung durch die Federspeicher-Feststellbremse durch Absperren des Druck in dem Steuerraum 55 mit dem Ventil 59 in der Sperrstellung unterbunden werden, bis über den Raddrehzahlsensor 23 erkannt worden ist, dass der Anhänger sich mit einer Geschwindigkeit bewegt, die kleiner ist als eine vorgegebene Geschwindigkeit.

Für die unterschiedlichen in den Figuren dargestellten Ausführungsformen können die einzelnen dargestellten pneumatischen Bauelemente separat ausgebildet sein und über Leitungsverbindungen miteinander verbunden sein. Möglich ist hierbei auch, dass als eine Einheit dargestellte Bauelemente, beispielsweise die Parkbremsventileinrichtung 27, mit mehreren unmittelbar miteinander verbundenen Modulen oder über Leitungen miteinander verbundenen Modulen ausgebildet sind. Auch die Zusammenfassung einzeln dargestellter Bauelemente zu gemeinsamen Modulen oder in einem gemeinsamen Gehäuse ist durchaus im Rahmen der vorliegenden Erfindung möglich. Fig. 4 zeigt eine Ausgestaltung, bei welcher die Parkbremsventileinrichtung 27, das Ventil 59, das Löseventil 5 und das Anhängerbremsventil 8 eine gemeinsame Baueinheit 62 bilden.

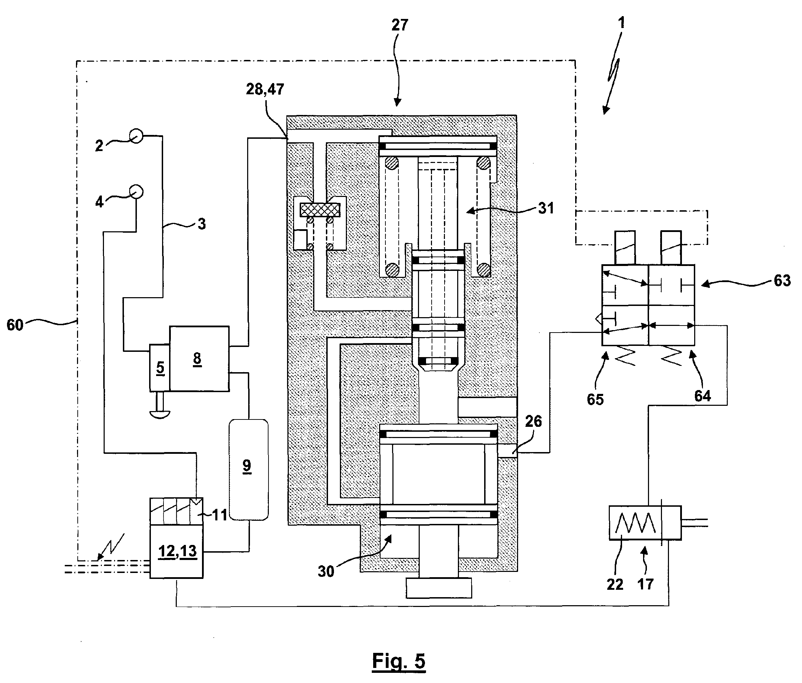

Für das in **Fig. 5** dargestellte Ausführungsbeispiel ist der Kupplungskopf Bremse 4 nicht über das Anhängerbremsventil 8, sondern unmittelbar mit dem Steueranschluss 11 der EBS-Steuereinheit 12 verbunden. In diesem Fall beinhaltet das Anhängerbremsventil 8 keine Notbremseinheit - vielmehr dient diese lediglich der Gewährleistung der Befüllung des Behälters 9 von dem Kupplungskopf Vorrat 2 über das Löseventil und der Drucksicherung in dem Behälter 9 bei Einbruch des Drucks in der Versorgungsleitung 3. In diesem Fall ist der Vorratsbehälter 9 über das Anhängerbremsventil 8 mit dem Steueranschluss 28 und dem Versorgungsanschluss 47 der Parkbremsventileinrichtung 27 verbunden. Des Weiteren erfolgt hier die Verbindung des Parkanschlusses 26 mit den Federspeicherkammern nicht über ein Wechselventil 20, wie dies gemäß Fig. 1-4 der Fall ist. Vielmehr ist in die Verbindung zwischen dem Parkbremsanschluss 26 und den Federspeicherkammem 22 eine Ventileinheit 63 zwischengeschaltet, welche für das dargestellte Ausführungsbeispiel über eine Steuerleitung 60 von der EBS-Steuereinheit 12 in
- eine Durchlassstellung, die in Fig. 5 wirksam ist, und
- eine Entlüftungsstellung, in der der Parkbremsanschluss 26 abgesperrt ist und die Federspeicherkammer 22 entlüftet wird,

steuerbar ist. Für das dargestellte Ausführungsbeispiel ist die Ventileinheit 63 mit der Kombination eines 2/2-Wege-Magnetventils 64 und eines 3/2-Wege-Magnetventils 65 gebildet, deren Schaltstellungen und stromlose Stellungen beispielhaft Fig. 5 zu entnehmen sind. Über die Ventileinheit 63 kann auch unabhängig von der Stellung des Parkventils 30 und der Notbremseinheit 31 eine Entlüftung der Federspeicherkammer 22 erfolgen. Ebenfalls möglich ist, dass in einer Sperrstellung der Ventileinheit 63, hier des 2/2-Wege-Magnetventils 64, die Belüftung der Federspeicherkammer aufrechterhalten wird, obwohl der Parkbremsanschluss 26 durch die Notbremseinheit 31 in der Entlüftungsstellung bereit entlüftet ist, was zu denselben Zwecken erfolgen kann wie eine entsprechende Ansteuerung des Ventils 59 gemäß Fig. 4.

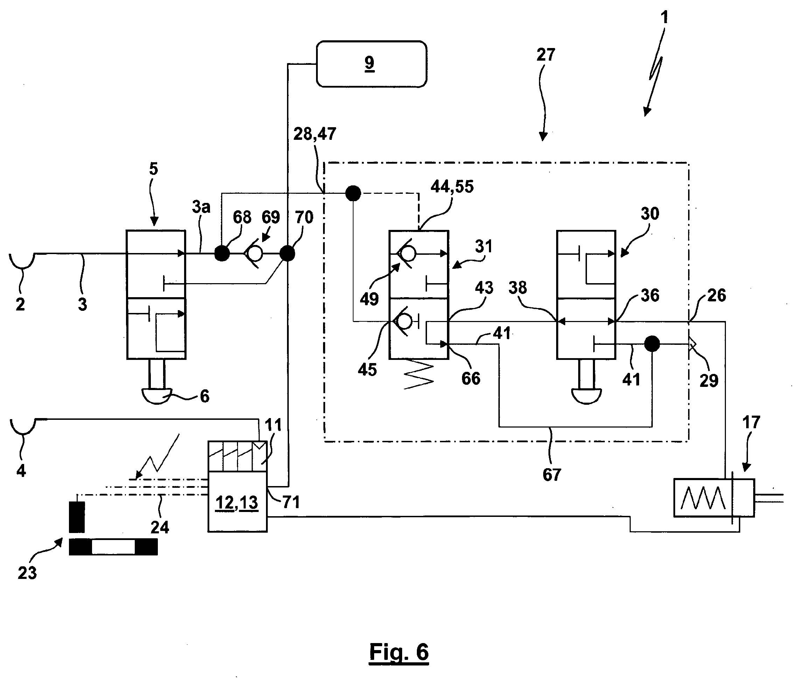

In **Fig. 6** sind die pneumatischen Bauelemente der Anhänger-Druckluftbremsanlage 1 abweichend zu den Fig. 1-5 mit den Funktionssymbolen gemäß DIN dargestellt. In der Parkbremsventileinrichtung 27 sind das Parkventil 30 und die Notbremseinheit 31 als separate pneumatische Bauelemente dargestellt, welche über Leitungsverbindungen miteinander verbunden sind. Die Notbremseinheit 31 ist hierbei ein 3/2-Wegeventil, welches pneumatisch von dem Steuerdruck an dem Steueranschluss 28 gesteuert ist. Das Rückschlagventil 49 ist in diesem Fall in die Notbremseinheit 31 integriert. In Fig. 6 ist die Entlüftungsstellung der Notbremseinheit 31 dargestellt. Das Parkventil 30 ist hier ein manuell betätigtes 3/2-Wegeventil, wobei beide Schaltstellungen stabil sind. In Fig. 6 ist des weiteren zu erkennen, dass in der Belüftungsstellung der Notbremseinheit 31 der Anschluss 43 mit einem Anschluss 66 verbunden ist, welcher über einen von Kanälen 41 gebildeten Bypass 67 unter Umgehung des Parkventils 30 mit der Entlüftung 29 verbunden ist. Gemäß Fig. 6 ist die Versorgungsleitung 3a ausgangsseitig des Löseventils 5 über eine Verzweigung 68 sowohl mit dem Steueranschluss 28 und dem Versorgungsanschluss 27 der Parkbremsventileinrichtung 27 als auch über ein Rückschlagventil 69 und eine weitere Verzweigung 70 mit dem Behälter 9 und einem Versorgungsanschluss 71 der EBS-Steuereinheit 12 verbunden. In diesem Fall kann eine Notbremsfunktion für die Betriebsbremse in die EBS-Steuereinheit 12 integriert sein, da der Kupplungskopf Bremse 4 ohne Zwischenschaltung eines Anhängerbremsventils 8 unmittelbar mit dem Steueranschluss 11 verbunden ist. In der Stellung Fahrt des Löseventils 5 gemäß Fig. 6 werden der Behälter 9 und der Versorgungsanschluss 71 über den Kupplungskopf Vorrat 2 gespeist, wobei eine Drucksicherung durch das Rückschlagventil 69 erfolgt. Ein Druckabfall in der Versorgungsleitung 3 führt, wie für die anderen Ausführungsbeispiele ausführlich erläutert, zu dem Abfall des Drucks an dem Steueranschluss 28 und dem Versorgungsanschluss 47 und u. U. zur Umschaltung der Notbremseinheit 31. Um einen Rangierbetrieb für abgekuppelten Anhänger zu ermöglichen, erfolgt die Umschaltung des Löseventils 5 in die in Fig. 6 nicht wirksame Lösestellung, in welcher Druckluft von dem Behälter 9 über das Löseventil 5 zu dem Steueranschluss 28 und Versorgungsanschluss 47 gelangt. Für ausreichenden Druck in dem Behälter 9 kann die Umschaltung der Notbremseinheit 31 und damit das Lösen der Federspeicher-Feststellbremse erfolgen, sofern sich das Parkventil 30 in der Belüftungs- oder Durchlassstellung befindet.

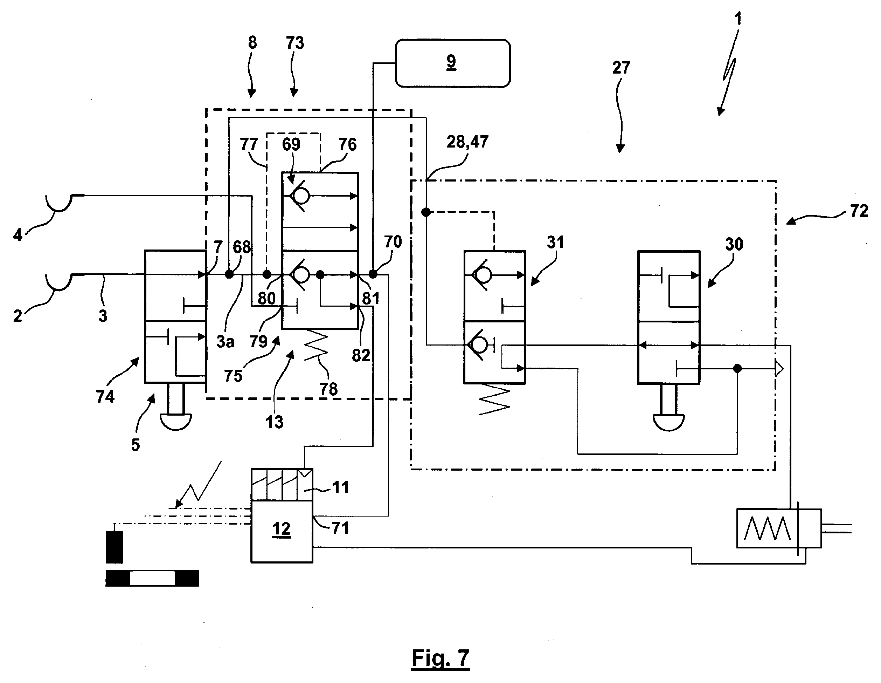

Für das in **Fig. 7** dargestellte Ausführungsbeispiel ist die Parkbremsventileinrichtung 27 identisch zu der Parkbremsventileinrichtung gemäß Fig. 6 ausgebildet. Gemäß Fig. 7 sind das Löseventil 5, ein Anhängerbremsventil 8 mit integrierter Notbremseinheit 13 und die Parkbremsventileinrichtung 27 als Module 72, 73, 74 aneinander angeflanscht, womit auch die erforderlichen Leitungsverbindungen zwischen den Modulen 72-74 hergestellt werden können. Bei ansonsten im Wesentlichen Fig. 6 entsprechender Ausgestaltung erstreckt sich die Versorgungsleitung 3a mit der Verzweigung 68 zu dem Steueranschluss 28 und dem Versorgungsanschluss 47 durch das Anhängerbremsventil 8. Das Anhängerbremsventil 8 verfügt über ein 4/2-Wegeventil 75, mit welchem die Notbremseinheit 13 wie folgt gebildet ist: Das 4/2-Wegeventil ist in die Stellung Fahrt, die in Fig. 7 nicht wirksam ist, steuerbar mittels der pneumatischen Beaufschlagung eines Steueranschlusses 76, der über die gestrichelt dargestellte Steuerleitung 77 mit der Versorgungsleitung 3a stromabwärts des Löseventils 5 verbunden ist. In dieser Stellung Fahrt ist ein mit der Versorgungsleitung 3a verbundener Anschluss 80 des 4/2-Wegeventils 75 über das Rückschlagventil 69 zwecks Drucksicherung mit einem Anschluss 81 des 4/2-Wegeventils 75 verbunden, welcher wiederum über die Verzweigung 70 sowohl mit dem Behälter 9 als auch mit dem Versorgungsanschluss 71 der EBS-Steuereinheit 12 verbunden. Des Weiteren verbindet das 4/2-Wegeventil 75 in der Stellung Fahrt einen mit dem Kupplungskopf Vorrat 4 verbundenen Anschluss 79 mit einem Anschluss 82, welcher mit dem Steueranschluss 11 der EBS-Steuereinheit 12 verbunden ist.

Kommt es in einer Notbremssituation zu einem Einbruch des Drucks an dem Steueranschluss 76, überführt eine Feder 78 das 4/2-Wegeventil 75 in die in Fig. 7 wirksame Notbremsstellung. In der Notbremsstellung ist der mit dem Kupplungskopf Bremse 4 verbundene Anschluss 79 abgesperrt. Hingegen ist der mit der Versorgungsleitung 3a verbundene Anschluss 80 des 4/2-Wegeventils 75 über dieses sowohl mit dem Anschluss 81 verbunden, welcher über die Verzweigung zu dem Behälter 9 und zu dem Versorgungsanschluss 71 führt, als auch mit dem Anschluss 82 verbunden, welcher zu dem Steueranschluss 11 der EBS-Steuereinheit führt. Auch hierbei erfolgt eine Drucksicherung über das Rückschlagventil 69. Die Notbremsstellung hat zur Folge, dass der Steueranschluss 11 mit Druckluft aus dem Druckluftbehälter 9 über das 4/2-Wegeventil 75 beaufschlagt wird. Andererseits erfolgt gleichzeitig mit der Entlüftung des Steueranschlusses 76 der Notbremseinheit 13 durch das 4/2-Wegeventil 75 die Entlüftung des Steueranschlusses 28 und des Versorgungsanschlusses 47.

Mit druckloser Versorgungsleitung 3 kann ein Rangierbetrieb durch Umschalten des Löseventils 5 in die Lösestellung ermöglicht werden. In der Lösestellung wird (mittels einer in Fig. 7 nicht dargestellten Leitungsverbindung) über das Löseventil 5 dem Eingangsanschluss 7 des Anhängerbremsventils 8 Druckluft aus dem Behälter 9 zugeführt, so dass für den Fall, dass
- der Druck in dem Behälter 9 größer ist als der Umschaltdruck der Notbremseinheit 13 und der Notbremseinheit 31,
- das Parkventil in der Belüftungsstellung ist und
- der Druck in dem Behälter 9 größer ist als der Lösedruck der Federspeicher-Feststellbremse
die Federspeicher-Feststellbremse gelöst wird.

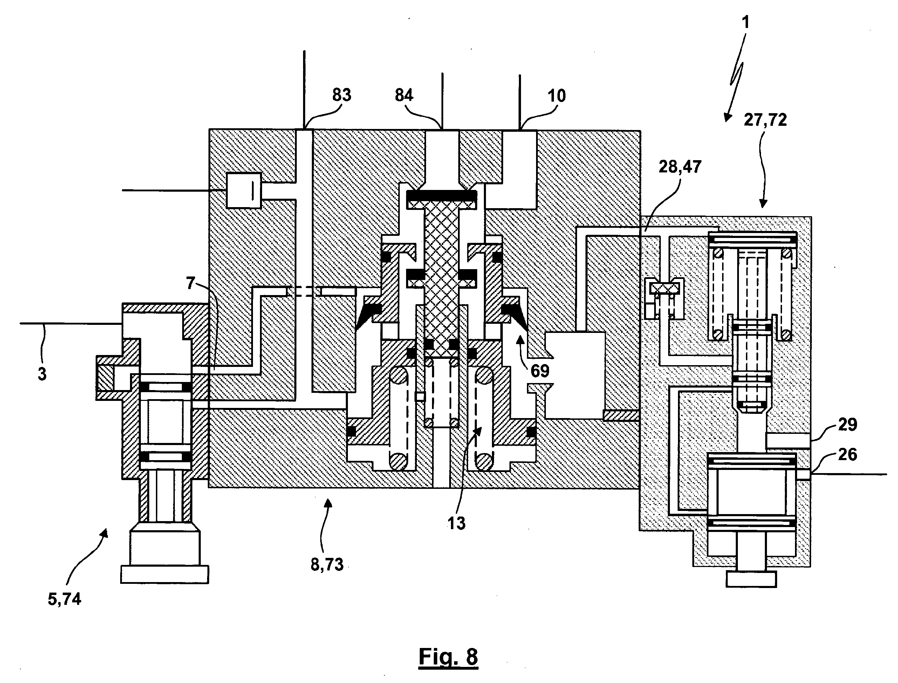

**Fig. 8** zeigt die Kombination des Löseventils 5 mit einem Anhängerbremsventil 8 und einer Parkbremsventileinrichtung 27 bei Ausbildung derselben mit Modulen 72, 73, 74. Zu erkennen ist, dass ein Anschluss 83, welcher mit dem Behälter 9 verbunden ist, einerseits durch das Anhängerbremsventil 8 zu einem Anschluss des Löseventils 5 geführt ist und andererseits permanent mit dem Steueranschluss 28 und Versorgungsanschluss 47 der Parkplatzventileinrichtung 27 verbunden ist. Ein Anschluss 84 des Anhängerbremsventils ist verbunden mit dem Kupplungskopf Bremse 4, während der Betriebsbremsanschluss 10 wie erläutert mit dem Steueranschluss 11 der EBS-Steuereinheit 12 verbunden ist. In das Anhängerbremsventil 8 ist die Notbremseinheit 13 integriert, über welche gewährleistet ist, dass für ausreichenden Druck an dem Eingangsanschluss 7 der Druck an dem Betriebsbremsanschluss 10 abhängig ist von dem Druck an dem Anschluss 84 und damit dem Bremssteuerdruck, während für Abfall des Drucks an dem Eingangsanschluss 7 die Verbindung zwischen den Anschlüssen 10, 84 gesperrt wird, aber eine Verbindung zwischen dem Anschluss 83 und dem Betriebsbremsanschluss 10 geschaffen wird.

Hinsichtlich weiterer Details zu dem konstruktiven Aufbau des Anhängerbremsventils 8 wird auf das Anhängerbremsventil gemäß DE 10 2007 053 765 A1 verwiesen, welches dort mit dem Bezugszeichen 3 gekennzeichnet ist und im Detail beschrieben ist. Die diesbezügliche Offenbarung in DE 10 2007 053 765 A1 wird zum Gegenstand der vorliegenden Anmeldung gemacht. Allerdings ist für das Ausführungsbeispiel gemäß Fig. 8 das Rückschlagventil 56 des Anhängerbremsventils 3 gemäß DE 10 2007 053 765 A1 entfallen.

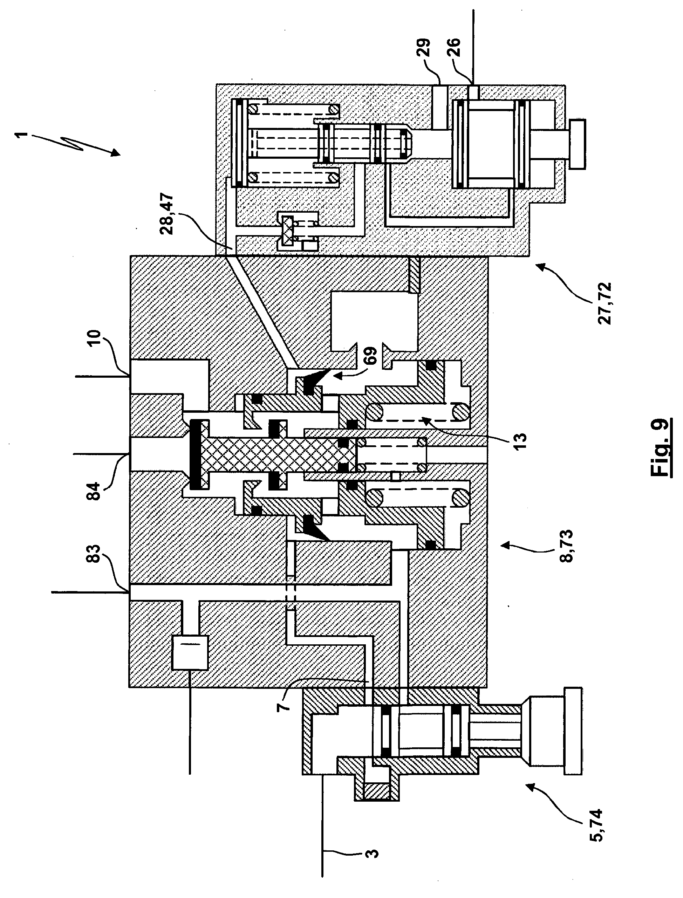

Während gemäß Fig. 8 der Steueranschluss 28 und der Versorgungsanschluss 47 mit dem Druck des Behälters 9 beaufschlagt sind, zeigt **Fig. 9** eine ansonsten Fig. 8 entsprechende Ausgestaltung, bei welcher der Steueranschluss 28 und der Versorgungsanschluss 47 mit dem Eingangsanschluss 7 ständig verbunden sind.

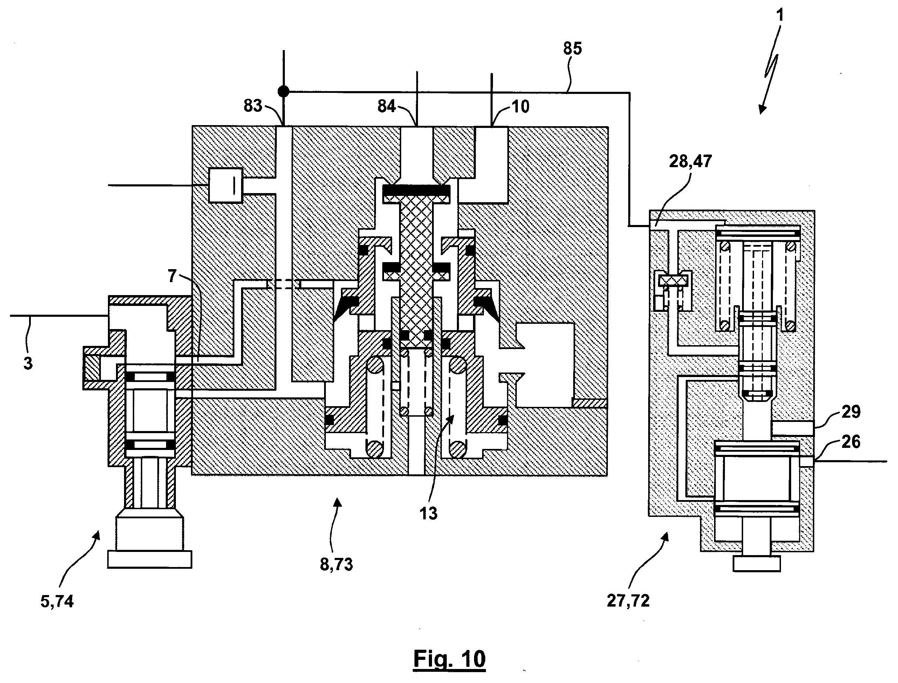

Schließlich zeigt **Fig. 10** eine im Wesentlichen Fig. 8 entsprechende Ausgestaltung, bei welcher die Parkbremsventileinrichtung 27 nicht an das Anhängerbremsventil 8 angeflanscht ist, sondern vielmehr räumlich beabstandet hiervon angeordnet ist. In diesem Fall erfolgt die pneumatische Verbindung des Steueranschlusses 28, 47 mit dem Behälter 9 nicht durch das Anhängerbremsventil 8 hindurch, sondern vielmehr über eine externe Leitung 85.

Die Parkbremsventileinrichtung 27 kann in zwei unterschiedlichen Betriebsstellungen eine Entlüftung der Federspeicher-Feststellbremse gewährleisten:
- befindet sich das Parkventil 30 in der Entlüftungsstellung, erfolgt die Entlüftung der Federspeicher-Feststellbremse unabhängig von der Schaltstellung der Notbremseinheit 31;
- befindet sich das Parkventil 30 in der Belüftungsstellung, kann die Entlüftung der Federspeicher-Feststellbremse erfolgen, wenn angesichts eines niedrigen Drucks am Steueranschluss 28 die Notbremseinheit 31 ihre Entlüftungsstellung einnimmt.

Es versteht sich, dass für sämtliche dargestellten Ausführungsformen
- die Umschaltdrücke für die Notbremseinheit 13 einerseits und die Notbremseinheit 31 andererseits gleich oder unterschiedlich ausgelegt sein können, so dass die Notbremseinheiten 13, 31 gleichzeitig oder zeitverzögert umschalten, und/oder
- die Umschaltdrücke mit einer Hysterese ausgestattet sein können.

Dargestellt und beschrieben sind vorrangig Ventile, welche translatorisch bewegte Ventilkörper (Steuerschieber, Ventilteller u. ä.) aufweisen und deren Betätigungsknopf ggf. translatorisch betätigt wird. Ohne dass hierdurch der Rahmen der Erfindung verlassen wird, können die Ventile auch mit rotatorisch bewegten Ventilkörpern gebildet sein und/oder rotatorisch betätigt werden, bspw. bei Ausbildung des Ventils als Drehschieberventil.

### BEZUGSZEICHENLISTE

- 1: Anhänger-Druckluftbremsanlage
- 2: Kupplungskopf Vorrat
- 3: Versorgungsleitung
- 4: Kupplungskopf Bremse
- 5: Löseventil
- 6: Betätigungsknopf
- 7: Eingangsanschluss
- 8: Anhängerbremsventil
- 9: Behälter
- 10: Betriebsbremsanschluss
- 11: Steueranschluss
- 12: EBS-Steuereinheit
- 13: Notbremseinheit
- 14: Bremsdruckausgabeanschluss
- 15: Bremsleitung
- 16: Betriebsbremskammer
- 17: Kombi-Bremszylinder
- 18: Verzweigung
- 19: erster Eingang
- 20: Wechselventil
- 21: Ausgang
- 22: Federspeicherkammer
- 23: Raddrehzahlsensor
- 24: Signalleitung
- 25: zweiter Eingang
- 26: Parkbremsanschluss
- 27: Parkbremsventileinrichtung
- 28: Steueranschluss
- 29: Entlüftung
- 30: Parkventil
- 31: Notbremseinheit
- 32: Gehäuse
- 33: Ventilkörper
- 34: Betätigungsorgan
- 35: Betätigungsknopf
- 36: Parkbremsanschluss
- 37: Steuerraum
- 38: Eingangsanschluss
- 39: Steuerkante
- 40: Steuerkante
- 41: Kanäle
- 42: Verbindungsleitung
- 43: Anschluss
- 44: Steueranschluss
- 45: Versorgungsanschluss
- 46: Verzweigung
- 47: Versorgungsanschluss
- 48: Versorgungsleitung
- 49: Rückschlagventil
- 50: Ventilkörper
- 51: Steuerraum
- 52: Steuerkante
- 53: Steuerkante
- 54: Steuerkolben
- 55: Steuerraum
- 56: Druckfeder
- 57: Leitung
- 58: Anschluss
- 59: Ventil
- 60: Steuerleitung
- 61: 2/2-Wege-Magnetventil
- 62: Baueinheit
- 63: Ventileinheit
- 64: 2/2-Wege-Magnetventil
- 65: 3/2-Wege-Magnetventil
- 66: Anschluss
- 67: Bypass
- 68: Verzweigung
- 69: Rückschlagventil
- 70: Verzweigung
- 71: Versorgungsanschluss
- 72: Modul
- 73: Modul
- 74: Modul
- 75: 4/2-Wegeventil
- 76: Steueranschluss
- 77: Steuerleitung
- 78: Feder
- 79: Anschluss
- 80: Anschluss
- 81: Anschluss
- 82: Anschluss
- 83: Anschluss
- 84: Anschluss
- 85: Leitung

## Patentansprüche

1. Parkbremsventileinrichtung (27) zur alleinigen Steuerung des Betriebszustands einer Federspeicher-Feststellbremse mit
a) einem Parkventil (30) mit einem Betätigungsorgan (34), über welches ein Ventilkörper (33) des Parkventils (30) manuell in eine Belüftungsstellung und eine Entlüftungsstellung bewegbar ist,
b) einer Notbremseinheit (31), welche bei einem Druckabfall an einem Steueranschluss (28) automatisch einen mit einer Federspeicher-Feststellbremse verbundenen Parkbremsanschluss (36) des Parkventils (30) mit einer Entlüftung (29) oder einem Behälter (9) verbindet, wobei
c) bei einem Druckanstieg an dem Steueranschluss (28) automatisch eine Veränderung des Betriebszustands der Parkbremsventileinrichtung (27) herbeiführbar ist, so dass der Parkbremsanschluss (36) des Parkventils (30) mit Druckluft versorgt wird, **dadurch gekennzeichnet dass**
d) die Notbremseinheit (31) einen Ventilkörper (50) besitzt, der mechanisch von dem Ventilkörper (33) des Parkventils (30) entkoppelt ist,
e) das Parkventil (30) bei einem Druckabfall an dem Steueranschluss (28) eine eingenommene Belüftungsstellung beibehält, in der ein Eingangsanschluss (38) des Parkventils (30) mit dem Parkbremsanschluss (36) verbunden ist, und
f) die Notbremseinheit (31)
fa) bei dem Druckabfall an dem Steueranschluss (28) den Eingangsanschluss (38) des Parkventils (30) mit einer Entlüftung (29) oder einem Behälter (9) verbindet und
fb) bei einem Druckanstieg an dem Steueranschluss (28) den Eingangsanschluss (38) des Parkventils (30) mit Druckluft versorgt.

2. Pneumatische Anhänger-Druckluftbremsanlage (1) mit
a) einer Parkbremseinrichtung (27) nach Anspruch 1 und
b) einer weiteren Notbremseinheit (13), welche bei einem Druckabfall an einem Steueranschluss (28) automatisch eine Notbremsstellung einnimmt, in der Betriebsbremsen des Anhängers aus einem Behälter (9) druckbeaufschlagt werden.

3. Pneumatische Anhänger-Druckluftbremsanlage (1) nach Anspruch 2, **dadurch gekennzeichnet, dass** die weitere Notbremseinheit (13) bei einem Druckanstieg an dem Steueranschluss (28) automatisch die Notbremsstellung verlässt.

4. Anhänger-Druckluftbremsanlage (1) nach Anspruch 2 oder 3, **dadurch gekennzeichnet, dass** der Steueranschluss (28) der Notbremseinheit (31) der Parkbremsventileinrichtung (27) mit der Versorgungsleitung (3) verbunden ist.

5. Anhänger-Druckluftbremsanlage (1) nach Anspruch 4, **dadurch gekennzeichnet, dass** ein Löseventil (5) vorhanden ist, dessen Ausgangsleitung oder Versorgungsleitung (3a)
a) sowohl mit dem Steueranschluss (28) der Notbremseinheit (31) der Parkbremsventileinrichtung (27)
b) als auch mit dem Steueranschluss (44; 76) der weiteren Notbremseinheit (13) verbunden ist.

6. Anhänger-Druckluftbremsanlage (1) nach Anspruch 5, **dadurch gekennzeichnet, dass** der Steueranschluss (28) der Notbremseinheit (31) der Parkbremsventileinrichtung (27) mit dem Behälter (9) verbunden ist.

7. Anhänger-Druckluftbremsanlage (1) nach einem der Ansprüche 2 bis 6, **dadurch gekennzeichnet, dass**
a) der Steueranschluss (28) der Notbremseinheit (31) der Parkbremsventileinrichtung (27) mit dem Behälter (9) und
b) der Steueranschluss (44; 76) der weiteren Notbremseinheit (13) mit der Versorgungsleitung (3)
verbunden ist.

8. Anhänger-Druckluftbremsanlage (1) nach einem der vorhergehenden Ansprüche 2 bis 7, **dadurch gekennzeichnet, dass** in die Parkbremseinrichtung (27), insbesondere in die Notbremseinheit (31) der Parkbremsventileinrichtung (27), ein Rückschlagventil (49) integriert ist.

9. Anhänger-Druckluftbremsanlage (1) nach einem der vorhergehenden Ansprüche 2 bis 8, **dadurch gekennzeichnet, dass** das Parkventil (30) und die Notbremseinheit (31) der Parkbremsventileinrichtung (27) mit derselben Entlüftung (29) verbindbar sind.

10. Anhänger-Druckluftbremsanlage (1) nach einem der vorhergehenden Ansprüche 2 bis 9, **dadurch gekennzeichnet, dass** die weitere Notbremseinheit (13) in ein EBS-Steuergerät (12) integriert ist.

11. Anhänger-Druckluftbremsanlage (1) nach einem der vorhergehenden Ansprüche 2 bis 10, **dadurch gekennzeichnet, dass** je nach Stellung eines oder des Löseventils (5) dem Steueranschluss (28) der Notbremseinheit (31) der Parkbremsventileinrichtung (27)
a) der Druck des Behälters (9) oder
b) der Versorgungsleitung (3)
zuführbar ist.

12. Anhänger-Druckluftbremsanlage (1) nach einem der vorhergehenden Ansprüche 2 bis 11, **dadurch gekennzeichnet, dass** in einer Leitungsverbindung zwischen einem Parkbremsanschluss (36) der Parkbremseinrichtung und der Federspeicher-Feststellbremse mindestens ein Magnetventil (64, 65) angeordnet ist, welches je nach Ansteuerung durch eine elektrische Steuereinheit, insbesondere durch die EBS-Steuereinheit (12),
a) die pneumatische Verbindung zwischen dem Parkbremsanschluss (36) des Parkventils (30) und der Federspeicher-Feststellbremse herstellt oder
b) die Federspeicher-Feststellbremse entlüftet.

13. Anhänger-Druckluftbremsanlage (1) nach einem der vorhergehenden Ansprüche 2 bis 12, **dadurch gekennzeichnet, dass** dem Steueranschluss (28) der Notbremseinheit (31) der Parkbremseinrichtung (27) mindestens ein Magnetventil (61) vorgeordnet angeordnet ist, welches durch eine elektrische Steuereinheit, insbesondere durch die EBS-Steuereinheit (12), ansteuerbar ist.

## Claims

1. Parking brake valve device (27) serving solely for the control of the operating state of a spring brake with
a) a parking valve (30) having an actuation means (34) by which it is possible to manually move a valve body (33) of the parking valve (30) into an aerating position and a deaerating position,
b) an emergency brake unit (31) which for a pressure decrease at a control port (28) automatically connects a parking brake port (36) of the parking vale (30) connected to a spring brake to an exhaust (29) or reservoir (9),
c) where for a pressure increase at the control port (28) it is possible to automatically achieve a change of the operating state of the parking brake valve device (27) such that the parking brake port (36) of the parking valve (30) is supplied with pressurised air, **characterised in that**
d) the emergency brake unit (31) comprises a valve body (50) which is mechanically decoupled from the valve body (33) of the parking valve (30),
e) for a pressure decrease at the control port (28) the parking valve (30) remains in a taken aerating position in which an input port (38) of the parking valve (30) is connected to the parking brake port (36) and
f) the emergency brake unit (31)
fa) for a pressure decrease at the control port (28) connects the input port (38) of the parking valve (30) with an exhaust (29) or a reservoir (9) and
fb) for a pressure increase at the control port (28) supplies pressurised air to the input port (38) of the parking valve (30).

2. Pneumatical trailer brake system (1) operated with pressurized air comprising
a) a parking brake device (27) of claim 1 and
b) another emergency brake unit (13) which for a pressure decrease at a control port (28) automatically activates an emergency brake position in which a reservoir (9) pressurises the service brakes of the trailer.

3. Trailer brake system (1) of claim 2, **characterised in that** for a pressure increase at the control port (28) the other emergency brake unit (18) automatically deactivates the emergency brake position.

4. Trailer brake system (1) of claim 2 or 3, **characterised in that** the control port (28) of the emergency brake unit (31) of the parking brake valve device (27) is connected to the supply line (3).

5. Trailer brake system (1) of claim 4, **characterised in that** a shunting valve (5) is provided, an output line or supply line (3a) of the shunting valve (5) being connected
a) both to the control port (28) of the emergency brake unit (31) of the parking brake valve device (27)
b) as well as to the control port (44; 76) of the other emergency brake unit (13).

6. Trailer brake system (1) of claim 5, **characterised in that** the control port (28) of the emergency brake unit (31) of the parking brake valve device (27) is connected to the reservoir (9).

7. Trailer brake system (1) of one of claims 2 to 6, **characterised in that**
a) the control port (28) of the emergency brake unit (31) of the parking brake valve device (27) is connected to the reservoir (9) and
b) the control port (44; 76) of the other emergency brake unit (13) is connected to the supply line (3).

8. Trailer brake system (1) of one of claims 2 to 7, **characterised in that** a check valve or non-return valve (49) is integrated into the parking brake device (27), in particular into the emergency brake unit (31) of the parking brake valve device (27).

9. Trailer brake system (1) of one of claims 2 to 8, **characterised in that** it is possible to connect the parking valve (30) and the emergency brake unit (31) of the parking brake valve device (27) to one and the same exhaust (29).

10. Trailer brake system (1) of one of claims 2 to 9, **characterised in that** the other emergency brake unit (13) is integrated into an EBS control device (12).

11. Trailer brake system (1) of one of claims 2 to 10, **characterised in that** dependent on the position of an or the shunting valve (5)
a) the pressure of the reservoir (9) or
b) the pressure of the supply line (3)
is fed to the control port (28) of the emergency brake unit (31) of the parking brake valve device (27).

12. Trailer brake system (1) of one of claims 2 to 11, **characterised in that** at least one solenoid valve (64, 65) is arranged in a line connection between a parking brake port (36) of the parking brake device and the spring brake, said at least one solenoid valve (64, 65)
a) providing the pneumatical connection between the parking brake port (36) of the parking valve (30) and the spring brake or
b) deaerating the spring brake.
dependent on the control by an electrical control unit, in particular by the EBS control unit (12),

13. Trailer brake system (1) of one of claims 2 to 12, **characterised in that** at least one solenoid valve (61) is arranged upstream from the control port (28) of the emergency brake unit (31) of the parking brake device (27), said at least one solenoid valve (61) being controllable by an electrical control unit, in particular by the EBS control unit (12).

## Revendications

1. Dispositif de soupape de frein de stationnement (27) pour la commande unique de l'état de fonctionnement d'un frein d'immobilisation à ressort, avec
a) une soupape de stationnement (30) avec un organe d'actionnement (34) par le biais duquel un corps de soupape (33) de la soupape de stationnement (30) peut être déplacé manuellement dans une position d'aération et dans une position de désaération,
b) une unité de freinage d'urgence (31) qui, en cas de chute de pression sur un raccord de commande (28), raccorde automatiquement à une purge d'air (29) ou à un réservoir (9) un raccord de frein de stationnement (36) de la soupape de stationnement (30) raccordé à un frein d'immobilisation à ressort,
c) une variation de l'état de fonctionnement du dispositif de soupape de frein de stationnement (27) pouvant être suscitée automatiquement en cas d'augmentation de pression sur le raccord de commande (28) de telle sorte que le raccord de frein de stationnement (36) de la soupape de stationnement (30) est alimenté en air comprimé,
**caractérisé en ce que**
d) l'unité de freinage d'urgence (31) possède un corps de soupape (50) qui est découplé mécaniquement du corps de soupape (33) de la soupape de stationnement (30),
e) la soupape de stationnement (30), en cas de chute de pression sur le raccord de commande (28), conserve une position d'aération adoptée dans laquelle le raccord d'entrée (38) de la soupape de stationnement (30) est raccordé au raccord de frein de stationnement (36), et
f) l'unité de freinage d'urgence (31),
fa) raccorde le raccord d'entrée (38) de la soupape de stationnement (30) à une purge d'air (29) ou à un réservoir (9) en cas de chute de pression sur le raccord de commande (28), et
fb) alimente le raccord d'entrée (38) de la soupape de stationnement (30) en air comprimé en cas d'augmentation de pression sur le raccord de commande (28).

2. Installation de freinage à air comprimé pneumatique pour remorque (1), avec
a) un dispositif de frein de stationnement (27) selon la revendication 1, et
b) une autre unité de freinage d'urgence (13) qui, en cas de chute de pression sur un raccord de commande (28), adopte automatiquement une position de freinage d'urgence dans laquelle des freins de service de la remorque sont alimentés en pression à partir d'un réservoir (9).

3. Installation de freinage à air comprimé pneumatique pour remorque (1) selon la revendication 2, **caractérisée en ce que** l'autre unité de freinage d'urgence (13) quitte automatiquement la position de freinage d'urgence en cas d'augmentation de pression sur le raccord de commande (28).

4. Installation de freinage à air comprimé pour remorque (1) selon la revendication 2 ou 3, **caractérisée en ce que** le raccord de commande (28) de l'unité de freinage d'urgence (31) du dispositif de soupape de frein de stationnement (27) est raccordé à la conduite d'alimentation (3).

5. Installation de freinage à air comprimé pour remorque (1) selon la revendication 4, **caractérisée en ce qu'**il existe une valve de desserrage (5) dont la conduite de sortie ou la conduite d'alimentation (3a)
a) est raccordée aussi bien au raccord de commande (28) de l'unité de freinage d'urgence (31) du dispositif de soupape de frein de stationnement (27)
b) qu'au raccord de commande (44; 76) de l'autre unité de freinage d'urgence (13).

6. Installation de freinage à air comprimé pour remorque (1) selon la revendication 5, **caractérisée en ce que** le raccord de commande (28) de l'unité de freinage d'urgence (31) du dispositif de soupape de frein de stationnement (27) est raccordé au réservoir (9).

7. Installation de freinage à air comprimé pour remorque (1) selon l'une des revendications 2 à 6, **caractérisée en ce que**
a) le raccord de commande (28) de l'unité de freinage d'urgence (31) du dispositif de soupape de frein de stationnement (27) est raccordé au réservoir (9), et
b) le raccord de commande (44; 76) de l'autre unité de freinage d'urgence (13) est raccordé à la conduite d'alimentation (3).

8. Installation de freinage à air comprimé pour remorque (1) selon l'une des revendications précédentes 2 à 7, **caractérisée en ce qu**'un clapet antiretour (49) est intégré dans le dispositif de frein de stationnement (27), en particulier dans l'unité de freinage d'urgence (31) du dispositif de soupape de frein de stationnement (27).

9. Installation de freinage à air comprimé pour remorque (1) selon l'une des revendications précédentes 2 à 8, **caractérisée en ce que** la soupape de stationnement (30) et l'unité de freinage d'urgence (31) du dispositif de soupape de frein de stationnement (27) peuvent être raccordées à la même purge d'air (29).

10. Installation de freinage à air comprimé pour remorque (1) selon l'une des revendications précédentes 2 à 9, **caractérisée en ce que** l'autre unité de freinage d'urgence (13) est intégrée dans un appareil de commande EBS (12).

11. Installation de freinage à air comprimé pour remorque (1) selon l'une des revendications précédentes 2 à 10, **caractérisée en ce que,** en fonction de la position d'une valve de desserrage (5) ou de la valve de desserrage (5),
a) la pression du réservoir (9) ou
b) de la conduite d'alimentation (3)
peut être conduite au raccord de commande (28) de l'unité de freinage d'urgence (31) du dispositif de soupape de frein de stationnement (27).

12. Installation de freinage à air comprimé pour remorque (1) selon l'une des revendications précédentes 2 à 11, **caractérisée en ce que,** dans un raccord de conduite entre un raccord de frein de stationnement (36) du dispositif de frein de stationnement et le frein d'immobilisation à ressort, il est disposé au moins une électrovanne (64, 65) qui, en fonction du pilotage par une unité de commande électrique, en particulier par l'unité de commande EBS (12),
a) établit le raccordement pneumatique entre le raccord de frein de stationnement (36) de la soupape de stationnement (30) et le frein d'immobilisation à ressort, ou
b) désaère le frein d'immobilisation à ressort.

13. Installation de freinage à air comprimé pour remorque (1) selon l'une des revendications précédentes 2 à 12, **caractérisée en ce qu**'au moins une électrovanne (61) est disposée en amont du raccord de commande (28) de l'unité de freinage d'urgence (31) du dispositif de frein de stationnement (27) et peut être pilotée par une unité de commande électrique, en particulier par l'unité de commande EBS (12).
